# EUROPÄISCHE PATENTSCHRIFT

(11) **EP 2 893 599 B1**
(45) Veröffentlichungstag und Bekanntmachung des Hinweises auf die Patenterteilung: **01.12.2021**
(21) Anmeldenummer: 13763027.3
(22) Anmeldetag: 10.09.2013
(51) Int. Cl.: H01R 13/66, H01R 13/639

(54) **STECKTEIL ZUR BILDUNG EINER STECKVERBINDUNG**
PLUG PART FOR FORMING A PLUG-IN CONNECTION
PIÈCE EMBROCHABLE SERVANT À RÉALISER UNE CONNEXION

(30) Priorität: 10.09.2012 CH 16492012
(43) Veröffentlichungstag der Anmeldung: 15.07.2015
(73) Patentinhaber: Selectron Systems AG, 3250 Lyss (CH)
(72) Erfinder: GUT, Max, CH-6353 Weggis (CH); RIEDEL, Bernd, CH-2575 Hagneck (CH)
(74) Vertreter: AMMANN PATENTANWÄLTE AG
(86) Internationale Anmeldenummer: PCT/EP2013/068747
(87) Internationale Veröffentlichungsnummer: WO 2014/037586

(56) Entgegenhaltungen:
- EP-A1- 2 009 523
- WO-A1-99/18496
- DE-A1- 19 812 901
- DE-A1-102005 002 472
- DE-U1-202006 015 797
- GB-A- 2 264 843
- US-A1- 2003 073 343
- US-A1- 2007 103 277
- US-A1- 2011 043 371
- US-A1- 2011 144 823
- US-A1- 2012 133 490

## Beschreibung

Die vorliegende Erfindung bezieht sich auf ein Steckteil, welches zur Bildung einer Steckverbindung mit einem Gegenstück verbindbar ist, das als Anschluss eines Gerätes vorzugsweise an ein Netzwerk dient.

In einer Vielzahl von Netzwerken werden Geräte untereinander und mit Signal- und Energiequellen einerseits und Signalsenken bzw. Energielasten andererseits mittels trennbarer Steckverbindungen verbunden. Diese trennbaren Verbindungen, welche aus Steckteilen und deren Gegenstücken bildbar sind, ermöglichen den schnellen Austausch von Geräten. Ebenso werden diese Verbindungen häufig als Testpunkte während der Inbetriebnahme und der Fehlersuche verwendet. Die Verkabelung ist jedoch oft fehleranfällig und die Fehlersuche oft mühsam.

Aus der DE 103 51 773 A1 und EP 1 818 859 B1 ist es bekannt, das Steckteil mit einem Transponder zu versehen, in welchem ein Identifikator gespeichert ist. Dabei wird zur Überprüfung, ob das Steckteil in das richtige Gegenstück gesteckt ist, der Identifikator an das Gerät übermittelt. Eine derartige Ausgestaltung des Steckteils hat nur beschränkte Anwendungsmöglichkeiten.

In der Offenlegungsschrift DE 10 2005 002 472 A1 wird eine Software-Schutzvorrichtung für eine Textilmaschine vorgestellt. Hierin wird dargelegt, wie durch das Speichern von Informationen in einem sogenannten "Dongle" Software vor Piraterie geschützt werden kann und wie die über die Software gesteuerte Maschinenfunktionalität Lizenz-gerecht beeinflusst werden kann.

Der Anwendungsbereich beschränkt sich auf Textilmaschinen, so dass u. a. nicht vorgesehen ist, maschinenspezifische Daten mit anderen im Dongle gespeicherten Daten zu verknüpfen, um damit sicherheitsrelevante Überprüfungen zertifizierter und zulässiger Hardware und Software Kombinationen zu erzwingen, oder Daten von an einem Netzwerk angeschlossenen Peripheriegeräten im Dongle abzuspeichern und miteinander zu verknüpfen.

In US 7,014,500 B2 wird eine Testmethode zur Identifikation von Kabeln ("cable") in sternförmig angeordneten Kabelsystemen offengelegt, wobei der Sternpunkt ein "Patch panel" ist. Wie dargelegt ist dieses System vorwiegend im EDV Verkabelungsbereich angewendet, wo implizit eine Vielzahl von gleichartigen Kabeln mit identischer und normalerweise normierter Steckerstift-Drahtaderzuweisung gegeben ist. Diese Methode ist nicht geeignet für das Testen von Verdrahtungen mittels Kabelbäumen, wie sie beispielsweise im Flugzeugbau oder Automobilbau üblich sind, da:
1) Ein Kabelbaum ("cable tree"), der per Definitionem aus mehreren Drähten (Kabeladern, "wires") besteht, die örtlich verzweigt sind und nicht alle Drähte eines Kabels von einem ersten Stecker zu exakt einem zweiten ("remote") Stecker führen, sondern die in einem Kabelbaum zusammengefassten Drähte zu mehreren Steckern in einer n:m Beziehung stehen können.
2) Die beschriebene Testmethode an allen Steckern einheitlich und permanent zwei Stifte für die Testsituation verfügbar halten muss, was bei einer Vielzahl verwendeter und verschiedener Sensoren und Aktuatoren nicht der Fall sein kann.
3) Zwei Drähte im Allgemeinfall von jedem Stecker zu jedem Stecker für die Testsituation permanent bereitgestellt werden müssten, was einen nicht unerheblichen Materialaufwand darstellen würde.
4) Als Voraussetzung die für die Testsituation reservierten Drähte ä priori korrekt verdrahtet sein müssen (Draht-zu Stift Zuweisung) und keinen Kabelbruch aufweisen dürfen.
5) Mit der beschriebenen Testmethode im besten Falle die korrekte Funktionalität der für die Testsituation bereitgestellten Drähte überprüft werden kann (getestet, wird ob die Testsituation funktional ist), nicht aber die andern Drähte des gleichen Kabelbaums, die für die eigentliche Systemfunktionalität notwendig sind.
6) Die beschriebene Testmethode weder die falsche Steckerstift-Drahtzuweisung, noch Kurzschlüsse zwischen einzelnen Drahtadern noch Unterbrüche einzelner Drähte erkennen kann.
7) Keine Ein-Mann Testdurchführung und Bedienung vorgesehen ist.

Eine Aufgabe der vorliegenden Erfindung ist es daher, ein Steckteil zu schaffen, welches erweiterte Anwendungsmöglichkeiten aufweist.

Ein Steckteil, das diese Aufgabe löst, ist im Anspruch 1 angegeben. Die weiteren Ansprüche geben bevorzugte Ausführungen an sowie ein Verfahren zum Programmieren eines erfindungsgemässen Steckteils, verschiedene Anordnungen und eine Anlage mit mindestens einem erfindungsgemässen Steckteil, ein Verfahren zum Betrieb eines Geräts, in welchem mindestens ein erfindungsgemässes Steckteil verwendet wird, und eine Anordnung mit einer Testvorrichtung.

Durch das Versehen des Steckteils mit einem Mikroprozessor gemäss Anspruch 1 ist ein weiter Bereich von Anwendungsmöglichkeiten gegeben.

So ist es z. B. möglich, Konfigurationsparameter, welche üblicherweise im Gerät gespeichert sind, in das Steckteil auszulagern und dieses zur Steuerung des angeschlossenen Geräts zu verwenden, um dieses zu konfigurieren.

Weiter ist die Möglichkeit geschaffen, das Steckteil dazu zu verwenden, den Betrieb des Geräts zu autorisieren. Dadurch kann z. B. verhindert werden, dass Sicherheitsbestimmungen verletzt werden, indem das Gerät mit nicht-zertifizierter Hardware und/oder Software betrieben wird. Dies wird dadurch erreicht, indem im Speicher des Steckteils folgende Informationen, welche die Soll-Zustandsdaten definieren, gespeichert sind:
- zulässige Kombinationen von Hardware- und Softwareversionen,
und vorzugsweise mindestens eine der folgenden Informationen, welche die Soll-Zustandsdaten definieren:
- Versionenstand der Hardware des Geräts,
- Versionenstand der Software des Geräts.
Vorzugsweise sind die Ist-Zustandsdaten, d. h. die aktuellen Versionen von Hardware und Software nicht auf dem Steckteil, sondern in den geräteinternen Komponenten enthalten. Durch Auslesen dieser Ist-Zustandsdaten und Vergleich mit den Soll-Zustandsdaten kann ein nicht-autorisierter Betrieb des Geräts verhindert werden. Im Weiteren ist die funktionale Gesamtsystemkompatibilität auch bei Austausch von Systemsteilen (sei es aus Gründen der Sicherheit oder der Teilsystem-Obsoleszenz oder anderer Aspekte wie beispielsweise der Reparatur-Ersatz) erzwingbar.

Weiter vorzugsweise ist zumindest ein Teil der im Speicher gespeicherten Informationen gekapselt. Dadurch wird verhindert, dass das Gerät nicht direkt auf diese zugreifen kann. Weiter ist eine unzulässige Änderung dieser gekapselten Informationen nicht möglich.

Eine weitere Anwendungsmöglichkeit ergibt sich beim Austesten von Netzwerken, das durch die Verwendung des Steckteils wesentlich vereinfacht werden kann.

So ist beispielsweise das Testen von Verdrahtungen in Kabelbäumen vereinfacht, bei welchen die Adern eines Steckteils zu mehr als einem anderen Steckteil führen können. Die Steckteile sind dabei so auslegbar, dass beispielsweise im Gegensatz zur US 7,014,500 B2 nicht einheitlich und permanent Stifte und Drähte für die Testsituation bereitgestellt werden müssen, dass falsche Steckerstift-Drahtzuweisung, Kurzschlüsse zwischen einzelnen Drahtadern, Unterbrüche einzelner Drähte und drgl. erkennbar sind, und dass eine Testdurchführung und Bedienung durch eine einzelne Person möglich ist.

Geht vom Steckteil ein Kabel ab zum Verbinden mit mindestens einem Gerät in einem Netzwerk, z. B. einem Peripheriegerät (Feldgerät) oder Steuergerät, so sind im Speicher des Steckteils Informationen über das mindestens eine Gerät speicherbar. Dadurch wird insbesondere die Punkt-zu-Punkt Verbindungskontrolle jeder einzelnen Kabeldrahtader im Netzwerk wesentlich vereinfacht.

Die Erfindung wird im Folgenden anhand von Ausführungsbeispielen unter Bezugnahme auf Figuren erläutert. Es zeigen
Fig. 1 ein Ausführungsbeispiel einer Steckverbindung für ein Gerät in einer konzeptuellen Darstellung;
Fig. 2 ein Ausführungsbeispiel eines Gegenstücks zur Bildung einer Steckverbindung in einer Explosionsansicht;
Fig. 3 ein Ausführungsbeispiel eines mit dem Gegenstück gemäss Fig. 2 verbindbaren Steckteils in einer Explosionsansicht;
Fig. 4 das Gegenstück gemäss Fig. 2 im zusammengesetzten Zustand in einer perspektivischen Ansicht;
Fig. 5 das Steckteil gemäss Fig. 2 im zusammengesetzten Zustand in einer perspektivischen Ansicht;
Fig. 6 eine Detailansicht gemäss dem Kreis VI in Fig. 5;
Fig. 7 ein weiteres Ausführungsbeispiel von Steckteil und Gegenstück in einer perspektivischen Ansicht;
Fig. 8 einen Ablauf eines ersten Ausführungsbeispiels einer Anwendung;
Fig. 9 eine Messvorrichtung zum Austesten eines Netzwerks in einer perspektivischen Ansicht; und
Figuren 10a und 10b einen Ablauf eines zweiten Ausführungsbeispiels einer Anwendung.

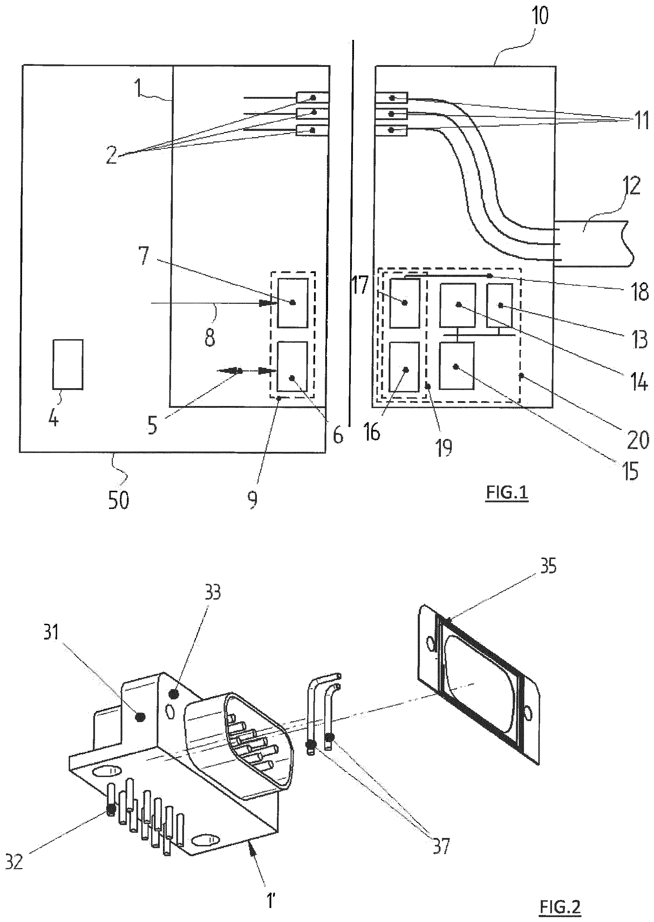

Fig. 1 zeigt ein Ausführungsbeispiel einer Steckverbindung für ein Gerät 50 in einer konzeptuellen Darstellung.

Das Gerät 50 umfasst mindestens einen Anschluss 1 als Zugang zu einem Netzwerk, über welches elektrische Energie und/oder Informationen übertragen werden. Das Gerät 50 dient z. B. als Steuerungsgerät in Form eines Automatisierungsgerätes, wie es in Automatisierungssystemen verwendet wird. Ein derartiges Automatisierungsgerät ist eingerichtet, ein Steuerprogramm zur Beeinflussung eines zu steuernden Prozesses abzuarbeiten, und steht u. a. mit Feldgeräten in Wirkverbindung. Diese sind typischerweise im Netzwerk in der Nähe des zu steuernden Prozesses angeordnet und dienen zur Erfassung von Prozessgrössen und/oder zur Beeinflussung des Prozesses. Sensoren und Aktoren sind derartige Feldgeräte.

Am Netzwerk können nebst weiteren Geräten in Art des Gerätes 50 und Aktoren und Sensoren weitere Netzwerkkomponenten angeschlossen sein. Derartige Netzwerkkomponenten sind beispielsweise elektrische oder elektronische Einheiten, die zur Eingabe dienen (z. B. Taster, Schalter, etc.) oder zur Ausgabe (z. B. LEDs oder andere Leuchtmittel).

Wie oben erwähnt, ist das Gerät 50 vorzugsweise als Steuergerät, insbesondere SPS ("speicherprogrammierbare Steuerung") ausgelegt. Ist ein Peripheriegerät (Feldgerät) in ähnlicher Weise strukturiert und/oder konfigurierbar wie ein solches Steuergerät 50, so ist selbstredend in analoger Weise die Anwendbarkeit nachfolgender Darstellung gegeben.

Das Gerät 50 weist Komponenten auf, z. B. einen Mikroprozessor 4, die es erlauben, Signale einzulesen, zu verarbeiten und die verarbeiteten Signale z. B. direkt an ein Feldgerät auszugeben und/oder an ein übergeordnetes Kommunikationsnetzwerk zu leiten. Dies erfolgt typischerweise bei einer Anlage eines Automatisierungssystem, welches Sensoren und Aktoren aufweist, in zeitlich wiederkehrender Weise. Dabei wird der Zustand der Anlage durch Sensoren erfasst und als Eingangssignale Steuerungsgeräten in Form des Gerätes 50 zur Verfügung gestellt. Aus den Eingangssignalen werden mittels der vorgesehenen Verarbeitungsprozeduren (Applikationsprogramm) Ausgangssignale erzeugt, welche schliesslich die Aktuatoren so ansteuern, dass der Zustand der Anlage zielgerichtet verändert oder auch gehalten wird, wie er ist.

Zur Bildung der Steckverbindung, welche eine mechanisch trennbare Stelle zum Netzwerk bildet, ist ein Steckteil 10 vorgesehen, welches mit dem als Gegenstück ausgebildeten Anschluss 1 am Gerät 50 verbindbar ist. Das Gerät 50 weist typischerweise ein Gehäuse auf, an deren einen Seite das Gegenstück 1 angeordnet ist. Das Gegenstück 1 ist dazu beispielsweise im Gehäuse eingebaut oder an dieses angebaut.

Das Gegenstück 1 weist Nutzkontakte 2 auf, welche mit den datenverarbeitenden Komponenten des Gerätes 50 verbunden sind. Die Nutzkontakte 11 am Steckteil 10, sind an ein Kabel 12 angeschlossen, welches vom Steckteil 10 abgeht.

Das Kabel 12 ist nicht zwingendermassen vorhanden. Es kann z. B. dann fehlen, wenn das Steckteil rein zur Konfiguration des Gerätes 50 verwendet wird und ein anderes Steckteil 10 mit Kabel 12 vorgesehen ist, über welches der Anschluss des Gerätes an das Netzwerk erfolgt. Entsprechend kann das Gerät 50 einen ersten Anschluss aufweisen, der rein zum Konfigurieren des Gerätes 50 dient, und einen zweiten Anschluss, der als Anschluss an das Netzwerk dient. Je nach Anwendungszweck ist der erste Anschluss und/oder der zweite Anschluss in Form des Gegenstücks 1 ausgebildet, welches mit dem Steckteil 10 verbindbar ist.

Die Nutzkontakte 2, 11 befinden sich z. B. auf Steckelementen in Form von nach aussen weisenden Kontaktstiften und dazu komplementär ausgebildeten, nach innen weisenden Kontaktöffnungen (in Fig. 1 nicht dargestellt). Je nach Anwendungszweck sind die Kontaktstifte am Steckteil 10, am Gegenstück 1 oder an beiden angeordnet. Entsprechend bildet das Steckteil 10 ein männliches Teil ("Stecker"), ein weibliches Teil ("Kupplung") oder ein Teil beiderlei Geschlechts. Entsprechend ist das Gegenstück 1 komplementär als Kupplung (Buchse), Stecker oder Teil beiderlei Geschlechts ausgebildet. Die Steckelemente können auch andersartig als in Form von Kontaktstiften und Kontaktöffnungen ausgebildet sein. Beispielsweise ist es denkbar, die eine Steckeinheit (Steckteil 10 oder Gegenstück 1) direkt als Teil einer gedruckten Leiterplatte mit Kontaktstellen zu realisieren, die mit Federkontakten in der anderen Steckeinheit (Gegenstück 1 bzw. Steckteil 10) kontaktierbar sind. Wenn beispielhaft nachfolgend das Steckteil 10 oder das Gegenstück 1 als "Stecker" bezeichnet wird, so sind damit alle möglichen Ausführungsformen wie oben erwähnt abgedeckt.

Im Weiteren werden nachfolgend Elemente, welche sich auf der Seite des Steckteils 10 befinden als "kabelseitig" bezeichnet, während "geräteseitige" Elemente auf der Seite des Gerätes 50 angeordnet sind.

Das Steckteil 10 umfasst einen nichtflüchtigen Speicher 13 und einen Mikroprozessor 14. Dieser dient zur Datenverarbeitung und kann auch Teil einer grösseren Einheit, z. B. eines Mikrokontrollers sein.

Der Speicher 13 ist als einzelne Speichereinheit oder in Form von mehreren Speichereinheiten ausgebildet. Je nach Auslegung kann das Steckteil 10 einen weiteren Speicher umfassen, der flüchtig ist und z. B. eine vom Speicher 13 separate Einheit oder mit diesem zusammen eine Gesamteinheit bildet. Im Speicher 13 sind je nach Anwendungszweck folgende Informationen gespeichert:
- eine Signatur, welche mindestens eine eindeutige Identifikation des Steckteils 10 ermöglicht,
- Liste der Konfigurationsparameter, die für das Starten und/oder den Betrieb des Gerätes 50 benötigt werden,
- Tabelle der zulässigen Kombinationen von Hardware- und Softwareversionen auf Seite des Gerätes 50,
- Daten, welche die Ausgestaltung und/oder den Einsatzzweck des Gerätes 50 definieren. Die Daten können u. a. lieferantenspezifische Bestellnummern oder Ähnliches enthalten und erlauben z. B. im Falle eines Defekts, ein geeignetes Gerätes 50 als Ersatz auszuwählen und einzusetzen. Die Daten können auch derart gewählt sein, dass das Steckteil 10 erkennen kann, ob es sich beim Gerät 50 um ein Testgerät handelt, welches zum Austesten eines Netzwerkes verwendet wird (vgl. Erläuterungen weiter unten).
- Daten über eine Anlage, von welcher das Gerät 50 Teil ist. Diese Daten enthalten z. B. Informationen darüber, wo sich das Steckteil 10 in der Anlage befindet, wo die vom Steckteil 10 abgehenden Kabeladern in der Anlage enden, welche elektrische Quelle oder Last sich endseitig einer Kabelader befindet und/oder für welche Quelle oder Last eine Kabelader verwendet wird (übergeordnet damit Daten, die daran angeschlossene Feldgeräte charakterisieren).
- Daten, welche das Gerät 50 während des Betriebs ermittelt hat und vor dem Ausschalten im Speicher 13 speichert, so dass sie beim Aufstarten des Gerätes 50 zur Weiterverarbeitung zur Verfügung stehen.
- Ein oder mehrere Programme, welche z. B. in der Speichereinheit des Speichers 13, wo die Daten abgelegt sind, in einem anderen Sektor oder auch in einer separaten Speichereinheit des Speichers 13 gespeichert sind. Diese Programme sind z. B. für folgende Zwecke ausgelegt:
   - Kommunikation mit dem Gerät 50,
   - Auswertung von Daten, welche im Speicher 13 gespeichert sind und/oder vom Gerät 50 übermittelt werden,
   - Steuern des Geräts 50 beim Starten und/oder beim Betrieb,
   - Austesten des Netzwerkes.

Die Informationen im Speicher 13 oder Teile davon sind vorzugsweise gekapselt, so dass das Gerät 50 nicht direkt auf diese zugreifen kann und auch eine unzulässige Änderung der Informationen nicht möglich ist. Zusätzlich und/oder alternativ können die Informationen durch einen Schlüssel gesichert sein, so dass ein Abfragen, Ändern und/oder Ergänzen der Informationen die Kenntnis des Schlüssels verlangt.

Vorzugsweise ist der Speicher 13 so ausgelegt, dass mindestens 1 Kilobyte, bevorzugt mindestens 2 Kilobyte und besonders bevorzugt mindestens 5 Kilobyte darin speicherbar sind.

Das Steckteil 10 umfasst weiter eine Kommunikationseinheit 15 mit dazugehörendem Kommunikationsinterface 16 zur Übermittlung von Daten an das Gerät 50. Geräteseitig umfasst das Gegenstück 1 eine entsprechende Kommunikationseinheit mit Kommunikationsinterface 6, welche vom verarbeitenden Mikroprozessor 4 des Gerätes 50 bedienbar ist, wie dies in der Fig. 1 durch den Doppelpfeil 5 angedeutet ist.

Im vorliegenden Ausführungsbeispiel ist das Steckteil 10 frei von einer eigenen Energiequelle (Batterie oder Akkumulator). Die Energieversorgung erfolgt geräteseitig von der Energiequelle des Gerätes 50, von welcher, wie in der Fig. 1 durch den Pfeil 8 angedeutet, Energie zu einem Energieübertragungsinterface 7 im Gegenstück 1 führbar ist. Über dieses ist die Energie zu einem Energieübertragungsinterface 17 als Teil des Gesamtinerface 19 des Steckteils 10 leitbar, über welches die Stromversorgung 18 der Elemente 13-15 ermöglicht wird.

Die in Fig. 1 mit dem gestrichelten Rechteck 20 eingerahmten Elemente 13-18 bilden somit die Intelligenz des Steckteils 10, wobei die Elemente 16 und 17 zusammen das Gesamtinterface 19 des Steckteils 10 zum Gerät 50 darstellen. Entsprechend bilden geräteseitig die Elemente 6 und 7 das Gesamtinterface 9 zur kabelseitigen Intelligenz 20.

Die Intelligenz 20 ist als elektronische Schaltung in integrierter oder diskreter Form bereitstellbar. Beispielsweise kann sie als Einzelchip oder Mehrfachchip ausgebildet sein.

Das Interface 19, welches funktionell in ein Interface zur Energieübertragung 17 und ein Interface zur Datenübermittlung 16 unterteilt ist, kann aus der Sicht der Implementation aus tatsächlich zwei getrennten Interfaces oder aus einer Kombination beider bestehen.

Mögliche Ausführungsbeispiele für ein reines Interface zur Energieübertragung 17 sind wie folgt:
- Das Interface zur Energieübertragung 17 kann einfachheitshalber über zwei zusätzliche Hilfskontakte im Steckteil 10 erfolgen, welche sich auf Steckelementen in Form von Kontaktstiften und/oder Kontaktöffnungen befinden, die mit den komplementären Steckelementen am Gegenstück 1 verbindbar sind. Eine galvanische Trennung zwischen der Intelligenz 20 des Steckteils 10 und dem Gerät 50 ist dann nicht unmittelbar gegeben.
- Als Alternative dazu ist eine transformatorische, typischerweise niederfrequente Ausführungsform möglich: Hier befinden sich im Steckteil 10 die sekundäre Induktivität, welche die Last bildet und welche mit der als Quelle dienenden Primärinduktivität, die im Gerät 50, vorzugsweise im Gegenstück 1 angeordnet ist, über einen magnetischen Kreis gekoppelt ist. Hier ist in der Regel eine galvanische Trennung zwischen der Intelligenz 20 des Steckteils 10 und dem Gerät 50 gegeben.
- Eine weitere mögliche Ausführungsform stellt eine kapazitive Kopplung dar, bei welcher eine geeignete Oberfläche des Gegenstücks 1 einer geeigneten Oberfläche des Steckteils 10 gegenübersteht und der Übergang zwischen Gegenstück 1 und Steckteil 10 das Dielektrikum eines davon gebildeten Kondensators darstellt.

Mögliche Ausführungsbeispiele für ein reines Interface zur Informationsübertragung 16 sind gleich wie oben beim Energieübertragungsinterface 17 gegeben, indem
- zwei zusätzliche Hilfskontakte im Steckteil 10 vorgesehen sind,
- eine transformatorische Lösung bereitgestellt wird, bei welcher die sekundäre Induktivität im Steckteil 10 mit der geräteseitigen Primärinduktivität über einen magnetischen Kreis gekoppelt ist, oder
- eine kapazitive Kopplung vorgesehen ist, bei welcher zur Bildung eines Kondensators eine geräteseitige Oberfläche einer kabelseitigen Oberfläche gegenübersteht.

Mögliche Ausführungsbeispiele für ein kombiniertes Informations- und Energieübertragungsinterface 16, 17 sind wie folgt:
- Zur Kombination beider Interfaces 16, 17 können drei oder auch mehr zusätzliche Hilfskontakte im Steckteil 10 vorgesehen sein, welche sich auf Steckelementen in Form von Kontaktstiften und/oder Kontaktöffnungen befinden, die mit den komplementären Steckelementen am Gegenstück 1 verbindbar sind. Dadurch ist ein serieller Bus (z. B. ein I2C Bus), ein paralleler Bus oder Ähnliches bereitstellbar, um sowohl Energie als auch bidirektional Information übertragen zu können.
- Auch eine transformatorische Lösung mit Primärinduktivität im Gerät 50 und Sekundärinduktivität im Steckteil 1 ist möglich, indem über den gleichen magnetischen Kreis sowohl Energie niederfrequent als auch Information hochfrequent (oder umgekehrt Energie hochfrequent und Informationen niederfrequent) überlagert übermittelt werden.
- Ein weiteres Beispiel für ein kombiniertes Interface 16, 17 ist mit dem Konzept des passiven Transponders gegeben, indem beim Steckteil 10 die Transponderfunktion und beim Gerät 50, vorzugsweise beim Gegenstück 1, die Funktion einer Leseeinheit ("Reader") vorgesehen ist. Dabei wird die Energie hochfrequent vom "Reader" zum "Transponder" übertragen, welcher damit die steckerseitige Intelligenz speist, während niederfrequent die Daten vom Mikroprozessor 4 über den "Reader" und "Transponder" zur steckerseitigen Kommunikationseinheit 15 und damit zum Mikroprozessor 14 übermittelt werden. Dieser Kommunikationspfad ist bidirektional und die Kommunikation muss nicht zwingendermassen durch den geräteseitigen Reader oder den geräteseitigen Mikroprozessor 4 initiiert sein, sondern kann auch von der steckerseitigen Intelligenz ausgelöst werden. Ebenso ist eine zeitmultiplexierte Ausgestaltung möglich, bei welcher auf eine gespeicherte Energieübertragung eine Informationsübertragung folgt. Die Informationsübertragung kann ihrerseits zeitmultiplexiert organisiert sein, so dass nach einer Phase für die anfragenden Seite eine Phase für die antwortende Seite folgt.
   Das Konzept des passiven Transponders bezieht sich damit hier nur auf die Energie- und Datenübertragung, nicht aber auf die übrige (eingeschränkte) Funktionalität eines Transponders.

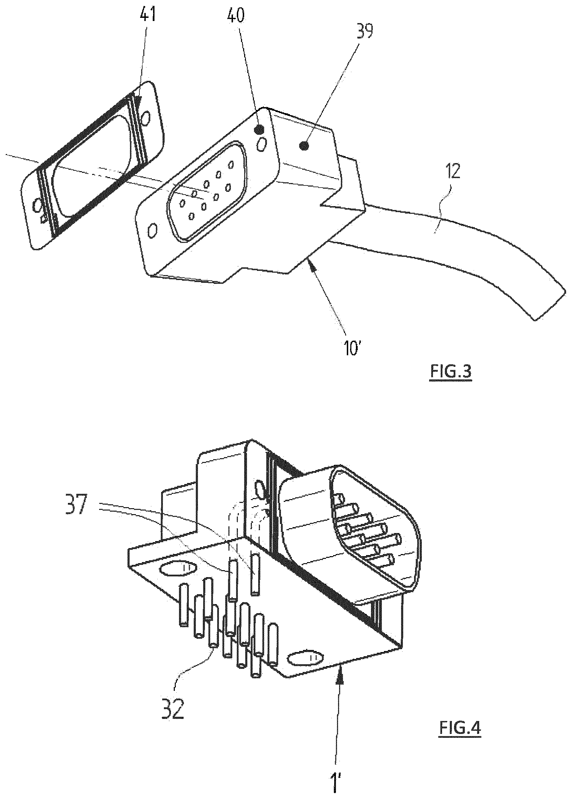

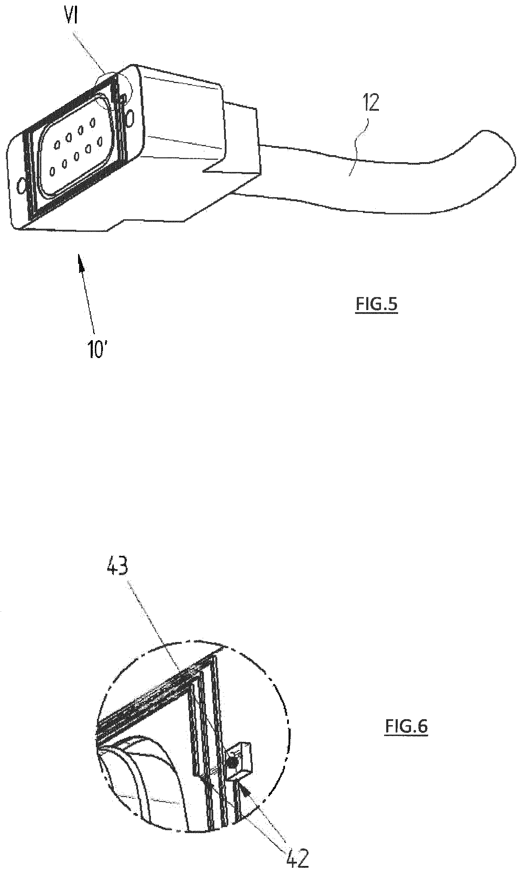

Figuren 2 bis 6 zeigen ein mögliches Ausführungsbeispiel von Gegenstück 1 und Steckteil 10 in Form eines Steckers 1' und einer Kupplung 10' mit Kabel 12.

Die Energie- und Datenübertragung ist hier drahtlos ausgebildet, indem der Stecker 1' eine Antennenspule 35 (Primärspule des Transformators) für einen Reader und die Kupplung 10' eine Antennenspule 41 (Sekundärspule des Transformators) für den Energieempfang sowie für die Kommunikationselektronik 43 aufweisen.

In einen Spritzgusskörper 31 des Steckers 1' sind Steckerstifte 32 eingebracht, welche beispielsweise gemäss einer gegebenen Norm in der originären Anordnung platziert sind. In die Frontfläche 33 des Spritzgusskörpers 31 ist bei dem geräteseitigem Stecker 1' die Antennenspule 35 der Reader-Elektronik (hier nicht gezeichnet) eingelegt oder aufgelegt. Die Anschlüsse dieser Spule 35 werden über zwei zusätzliche Anschlussstifte 37 an die Reader-Elektronik angeschlossen. Diese ist eingerichtet, mit der steckerseitigen Intelligenz über die Kommunikationselektronik 43 zu kommunizieren. Im Spritzgusskörper 39 des Steckteils 10' ist an dessen Frontseite 40 eine Antennenspule 41 eingegossen oder aufgebracht. Die Anschlüsse 42 dieser Spule 41 sind mit der kabelseitigen Kommunikationselektronik 43 verbunden.

Wird das Steckteil 10' in den geräteseitigen Stecker 1' gesteckt, so liegen sich die Frontflächen 33, 40 dieser beiden Teile 1', 10' achsengenau und parallel in kurzem Abstand gegenüber. Sie bilden damit ein System, das sowohl Energie vom Reader zur kabelseitigen Elektronik 43 als auch Information zur und von der Elektronik 43 nach der energietransferierenden Konzeption passiver Transponder übertragbar sind. Die Reader-Elektronik im Stecker 1' kommuniziert mit der Elektronik des Gerätes (hier nicht gezeichnet) und umgekehrt.

Vorteilhaft an dieser Ausführungsform ist die passive und kontaktlose Kommunikation. Ebenso können alle Steckerstifte 32 des Steckers 1', wenn sie gemäss einem Standard angeordnet sind, ohne Einschränkungen verwendet werden. Im Weiteren ist eine galvanische Trennung zwischen der Elektronik im Steckteil 10' und den Steckerstiften 32 einfach umsetzbar.

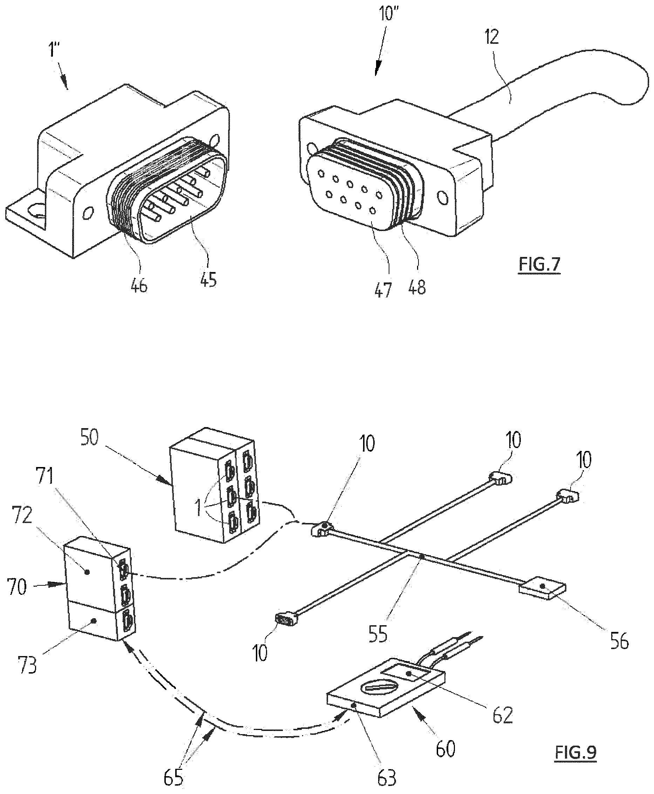

Die flächenhafte Realisation der durch die Antennenspulen 35, 41 gegebenen Induktivitäten wie in den Figuren 2 bis 6 dargestellt ist durch eine andersartige ersetzbar, beispielsweise eine zylinderspulenartigen Realisation (vgl. Fig. 7). Die beiden Spulen sind jeweils so auszulegen, dass eine enge Koppelung beider Spulen resultiert, um eine Auswirkung auf etwaige weitere, in der Nähe angeordnete Stecker zu begrenzen und eine effiziente Energieübertragung zu erreichen. In Bezug auf die Kabelleitungen ist eine zu ihnen orthogonale Anordnung der Spulen, wie dies bei den Beispielen gemäss Figuren 2 bis 6 sowie Fig. 7 der Fall ist, vorteilhaft, um bei gegenseitiger Koppelung zwischen der geräteseitigen Induktivität und der kabelseitigen Induktivität auf der Kabelseite Auswirkungen zu den Kabelleitungen zu minimieren.

Fig. 7 zeigt eine Variante von Gegenstück 1 und Steckteil 10 in Form von Stecker 1'' und Kupplung 10'' mit Kabel 12. Der Stecker 1'' enthält einen Steckerkragen 45, um welchen eine Spule 46 gewickelt ist. Das Steckteil 10'' weist einen herausragenden Verbindungskörper 47 auf, welcher eine Spule 48 aufweist. Die Spulen 46, 48 sind demnach zylinderartig ausgebildet. Gleich wie beim Beispiel gemäss Figuren 2 bis 6 sind Reader-Induktivität und Transponder-Induktivität im eingesteckten Zustand eng miteinander gekoppelt und bilden so einen kernlosen Transformator mit Primärspule und Sekundärspule. Die Wicklungen 46, 48 können auch in Bezug auf die elektromagnetische Verträglichkeit ("EMV") schirmende Funktionen übernehmen. Überdies kann ein schirmender Kragen über die Spule 46 des Steckers 1'' und/oder unter die Spule 48 der Kupplung 10'' platziert werden, um die Koppelungseigenschaften sowie EMV-Eigenschaften bei geeigneter Materialwahl zusätzlich zu begünstigen.

### Ausführungsbeispiel einer Konfiguration und Autorisation eines Gerätes mittels des Steckteils

Bei zertifizierten Anlagen ist es erforderlich, dass die korrekte Hardware-Software-Konfiguration sichergestellt und das geforderte Sicherheitslevel gewährleistet ist.

Besonders bei sicherheitskritischen Anwendungen wie zum Beispiel Flugzeugen oder Eisenbahnen wird ein vollständiges Steuerungssystem aus Hardware, Software und die ganze dazugehörige Peripherie auf seine Funktionstüchtigkeit hin validiert und diese Validation insbesondere in Bezug auf die sicherheitsrelevanten Funktionen von einem akkreditierten Prüfzentrum für Sicherheit und Qualität, z. B. TÜV, auf ihre Funktionalität und ihre Vorschriften-Konformität hin beglaubigt.

Es ist selbstverständlich, dass diese Beglaubigung sich vorerst ausschliesslich auf die aktuell validierte Konfiguration von Hardware-Änderungsstand wie auch Software-Versionsstand mitsamt Buildnummer bezieht.

Jede Änderung dieser Ausgangskonfiguration ist anhand von Differenzenbeschreibungen zu dokumentieren und vom akkreditierten Testcenter "nachbeglaubigen" zu lassen. Dies sind für den Produzenten besonders im Flugzeugbau unter Umständen nicht unerhebliche Aufwände.

Nur nach erfolgreicher Nachbeglaubigung darf die neu erstellte Hardware-Software-Konfiguration in den Normaleinsatz überführt werden.

Gerade bei langfristig eingesetzten Anlagen (meist grösser als 20 Jahre) ist es oft schwierig, die Liste der zugelassenen und beglaubigten Hardware-Software-Konfigurationen aufdatiert und im Reparaturfall oder Ersatzfall rasch verfügbar zu halten.

Das Risiko der Verwendung nicht zertifizierter Hardware-Software-Konfigurationen steigt mit der Anzahl der durch den Hersteller durchgeführten Änderungen, der Variabilität der durch den Hersteller ausgelieferten Anlagen, und mit zunehmender Einsatzdauer der Anlagen auch aufgrund steigender Obsoleszenzhäufigkeit.

Dies gilt besonders dann, wenn für den Unterhalt der Anlagen nicht mehr der Gerätehersteller oder der Systemintegrator, sondern der Betreiber selbst verantwortlich zeichnet und ein genügender Ausbildungsstand des Unterhaltspersonals nicht zwingend garantiert ist.

Für den Hersteller wie auch den Anlagenbetreiber stellt sich damit ein grundsätzliches, administratives und organisatorisches Problem. Diesem Problem - die Sicherstellung des ausschliesslichen Einsatzes nur zugelassener Hardware-Software-Konfigurationen - kann begegnet werden, indem jeweils die Liste der zulässigen und beglaubigten Kombinationen ausserhalb der Geräte, aber dennoch "vor Ort" verfügbar ist. Dazu bietet sich die Speicherung dieser Liste in dem oder einem kabelseitigen Steckteil an, das sowohl Informationen des Steuersystems als auch der an das Kabel angeschlossenen Feldgeräte enthält.

Nachfolgend ist ein Ausführungsbeispiel erläutert, bei welchem Informationen im Steckteil 10 dazu verwendet werden, das Gerät 50 zu konfigurieren und dessen Betrieb zu autorisieren. Das Gerät 50 ist z. B. als Automatisierungssystem Teil einer zertifizierten Anlage.

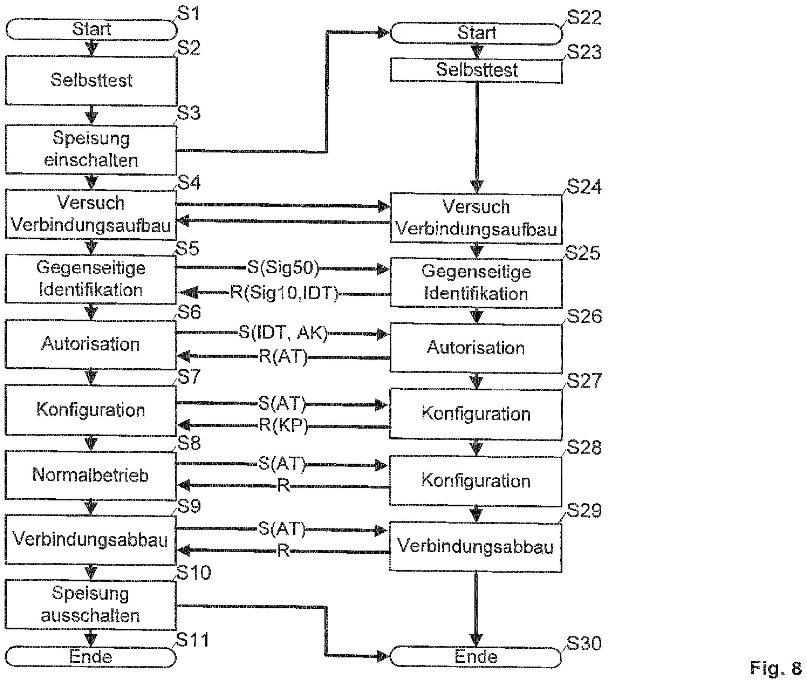

Fig. 8 zeigt den konzeptuellen Ablauf der Vorgänge, wobei S1-S11 die im Gerät 50 und S22-S30 die im Steckteil 10 ablaufenden Schritte bezeichnen. Die Abfrage von Informationen durch das Gerät 50 erfolgt z. B. in Art eines Services und ist in der Fig. 8 durch einen mit "S" ("Service Request") gekennzeichneten Pfeil angedeutet. Die darauffolgende Antwort des Steckteils 10 ist jeweils durch einen mit "R" ("Response") gekennzeichneten Pfeil angedeutet.

Gerät 50 und Steckteil 10 sind z. B. so eingerichtet, dass das Gerät 50 nur generische Routinen enthält und frei von anlagenspezifischen Parametern ist, während das Steckteil 10 keine geräte- oder anlagenspezifischen Routinen enthält, jedoch die Parameter dazu.

Das Gerät 50 führt nach dem Einschalten, Schritt S1 in Fig. 8, als erste Betriebsphase einen Selbsttest S2 durch, in welchem die Funktionsfähigkeit der grundlegenden Komponenten des Gerätes 50 geprüft wird. Danach schaltet es im Schritt S3 die Energieversorgung für das Steckteil 10 ein, was den Start des Steckteils 10 bewirkt, Schritt S22. Die Intelligenz des Steckteils 10 führt danach ebenfalls einen Selbsttest S23 durch.

In einem nachfolgenden Schritt S4, S24 versuchen das Gerät 50 und das Steckteil 10 miteinander eine Kommunikationsbeziehung aufzubauen. Gelingt dies, so gehen das Gerät 50 in die Identifikationsphase S5 und das Steckteil 10 in S25 über. In dieser verlangt das Gerät 50 neben anderem (z. B. Typ und Beschreibung des Kabelbaums) von dem Steckteil 10 seine Signatur, Sig10, um dieses identifizieren zu können, und übermittelt seinerseits eine Signatur, Sig50, die die Identifikation des Geräts 50 durch das Steckteil 10 zulässt. Damit ist beidseitig bekannt, wer Gegenpart einer Steckeinheit 1 bzw. 10 ist. Zusätzlich kann das Steckteil 10 aufgrund der Signatur Sig50 des Gerätes 50 erkennen, um welchen Typ von Kommunikationsgerät es sich handelt, z. B. ein Messgerät, ein Konfigurationsgerät, etc. und in welchem Betriebsmodus das angeschlossene Gerät 50 verwendet werden soll, z. B. als Automatisierungssystem im regulären Betriebsmodus oder eventuell als Testsystem in einem ungefährlichen, sicherheitstechnisch unkritischen Simulationsmodus.

Aufgrund der Signaturen kann während der Identifikationsphase S5, S25 auch festgestellt werden, ob das kabelseitige Steckteil 10 zum geräteseitigen Gegenstück 1 passt oder ob eventuell eine Fehlsteckung vorliegt, z. B bei Verwendung von zwei gleichen Steckteilen 10, jedoch mit verschiedenen Stift- bzw. Signalzuweisungen. Diese Verifikation kann geräte- und/oder kabelseitig durchgeführt werden.

Das Steckteil 10 übergibt in der Identifikationsphase S25 weiter bei korrekter Situation ein dem Typ und Betriebsmodus entsprechendes Identifikationstoken (IDT).

Hat das Gerät 50 ein Identifikationstoken, wechselt es in die Autorisationsphase S6. In dieser Phase der Interaktion zwischen Gerät 50 und Steckteil 10 wird ausgehandelt, ob das Gerät 50 grundsätzlich in den Normalbetrieb übergehen können wird oder nicht. Dazu wird vom Gerät 50 eine Liste, AK ("Aktuelle Komponenten"), seiner aktuell verwendeten Hardware- und geladenen Softwarekomponenten und deren Beschreibung dem Steckteil 10 zur Verfügung gestellt. (Die Beschreibung kann z. B. Typ und Änderungsstand des Geräts 50, insbesondere der Boards umfassen, Versionen oder Teile davon (z. B. Buildnummern) sicherheitsrelevanter SoftwareKomponenten, etc.) Das Steckteil 10 überprüft nun im Schritt S26 eigenständig anhand der im Speicher 13 gespeicherten "Tabelle der zulässigen Kombinationen von Hardware- und Softwareversionen", ob diese mit der vom Gerät 50 gelieferten Liste AK korrespondiert und somit eine von einem akkreditierten Prüfzentrum beglaubigte Kombination ist oder nicht. Ist es eine beglaubigte Kombination und ist aufgrund des Identifikationstokens IDT erkannt, dass der Normalbetrieb des Geräts 50 eingeleitet werden soll, so liefert das Steckteil 10 beim Schritt S26 als Antwort ein exklusives Autorisationstoken, AT, ohne dieses, das angeschlossene Gerät 50 systeminhärent nicht in den Normalbetrieb übergehen kann. Es kann jedoch das Absetzen entsprechender Statusmeldungen über ein Kommunikationsmedium, z. B. ein Display, vorgesehen sein, wenn kein AT erteilt wird.

In einer nachfolgenden Phase, der Konfigurationsphase S7 und S27, liefert das Steckteil 10 auf Anfrage des Gerätes 50 und unter Vorlage des vorher erhaltenen exklusiven Autorisationstoken AT die zur entsprechenden Kombination aus Hardware und Software passenden Konfigurationsparameter, KP. Diese wurden vorgängig in der Liste der Konfigurationsparameter im Speicher 13 des Steckteils 10 abgespeichert. Dazu gehören beispielsweise und nicht abschliessend: definitive Adressen, unter welchem das Gerät 50 über Bussysteme ansprechbar ist, Zuweisung von Signalpegeln zu den Kontaktstiften der geräteseitigen Steckeinheit 1 auch in Abhängigkeit der daran angeschlossenen Feldgeräte, Filter-Parameter, Verstärkungsfaktoren, etc. Ohne das Vorhandensein des exklusiven Autorisationstoken AT übermittelt das Steckteil 10 keine Konfigurationsdaten. Anhand der empfangenen Konfigurationsdaten ist das Gerät 50 andererseits anschliessend fähig, sich dynamisch zu konfigurieren.

Nach der Konfiguration geht das Gerät 50 in die letzte Phase S8, die Normalbetriebsphase, über und übernimmt seine zweckorientierte Aufgabe: Der verarbeitende Mikroprozessor 4 des angeschlossenen Gerätes 50 kann die Kommunikationsbeziehung mit dem Mikroprozessor 14 im Steckteil 10 beenden und die Speisung der kabelseitigen Intelligenz 20 ausschalten. Er kann dies aber auch erst später durchführen, beispielsweise wenn die kabelseitige Intelligenz 20 für weitere, insbesondere sicherheitsrelevante Aufgaben verwendet werden soll. Jedenfalls ist der verarbeitende Mikroprozessor 4 des angeschlossenen Gerätes 50 nun fähig in den Normalbetrieb zum Einlesen, Verarbeiten, Kommunizieren mit dem übergeordneten Kommunikationsnetzwerk und der Signalausgabe überzugehen.

Vor dem Ausschalten kann das Gerät 50 optional die eventuell für das Weiterarbeiten nach Wiedereinschalten benötigten Informationen nichtflüchtig im Steckteil 10 abspeichern. Anschliessend wird in S9, S29 die Verbindung regulär abgebaut und die Speisung des Steckteils 10 ausgeschaltet, S10.

Die Vorteile dieses Ausführungsbeispiels sind wie folgt zusammenfassbar:
- Sämtliche oder bestimmte Parameter sind aus den SoftwareKomponenten des Geräts in das Steckteil auslagerbar. Diese Komponenten sind damit rein generisch (universell, allgemein) auslegbar.
- Durch die Intelligenz im Steckteil sind sämtliche oder bestimmte Konfigurationsdaten und/oder sicherheitsrelevanten Daten im Sinne der objektorientierten Programmierung gekapselt bereitstellbar. Sie können daher nicht direkt und auch nicht ohne Überprüfung durch die kabelseitige Intelligenz vom verarbeitenden Mikroprozessor des angeschlossenen Gerätes gelesen und verwendet werden, da ihm die interne Struktur der Informationshaltung und deren Informationsdarstellung im kabelseitigen Speicher system- und konzeptinhärent nicht bekannt ist und die kabelseitige Intelligenz die Evaluation der Daten in der Art eines Services eigenständig durchführt. Dabei bezieht sich die Kapselung ("Information hidding") nicht nur auf den zugriffstechnischen Aspekt, sondern ist erweitert auf den örtlichen Aspekt (die Information ist in einem anderen physikalischen Speicher örtlich anderswo abgespeichert) und den bearbeitungsmässigen Aspekt (die Information wird durch einen anderen Prozessor bearbeitet).
- Auch die Prozedur zum Booten des Geräts ist so gestaltbar, dass sie parameterfrei ist. Sie kann in dieser allgemeinen (d. h. generischen) Form verifiziert und validiert und von einem akkreditierten Prüfzentrum für Sicherheit und Qualität formell freigegeben werden. Diese Prozedur bildet den grundsätzlich als unveränderlich betrachteten Kern der Software und wird auch bei einem neuerlichen Download weiterer Softwarekomponenten nicht angetastet.
- Das Gerät kann in einem nicht-konfigurierten Zustand ausgeliefert werden. In einem Ersatzfall wird das alte Gerät aus der Anlage entfernt und ein neues - auch sogar mit einem andern Änderungsstand - eingesetzt. Die Software wird hinuntergeladen und vor Einsatz auf ihre Kompatibilität mit der aktuellen Hardware überprüft. Damit kann die ausschliessliche Verwendung nur beglaubigter Kombinationen von Hardware- und Softwareversionen erzwungen werden und damit auch langfristig eine geforderte Anlagensicherheit garantiert werden, dies auch deshalb, weil das Gerät 50 die aktuellen Versionsdaten nicht aus dem Speicher des Steckteils 10 ausliest, sondern diese direkt von den eigenen Komponenten des Geräts 50 ausliest.
- Wird durch ein akkreditiertes Prüfzentrum eine neue Konfiguration aus Hardware und/oder Software freigegeben, so kann diese bei einem nächsten regulären Unterhalt der Anlage durch Aufdatieren der erweiterbaren Tabelle der zulässigen Kombinationen von Hardware- und Softwareversionen und der Liste der Konfigurationsparameter in dem kabelseitigen Steckteil durchgeführt werden, ohne dass die aktuell installierte Konfiguration dazu zwingend verändert werden muss. In dem Sinne ist präventiv, für einen nächsten (auch nicht planmässigen) Servicefall eine mögliche Änderung der Software-Hardware-Kombination vorbereitet und dann sehr schnell durchführbar.
- Ebenso schnell kann im Reparaturfall das Unterhaltspersonal mit einem geeigneten Servicegerät die Bestelldaten und die Anlagenkonfiguration aus dem kabelseitigen Steckteil, welches in das defekte Gerät gesteckt ist, beziehen und eine schnelle (auch automatisierte) Materialbestellung auslösen, die korrekt ist und problemlos wieder den geforderten Sicherheitsanforderungen genügt. So sind auch Materialverwechslungen weitgehend ausgeschlossen.
- Ebenso ist es bei der Verwendung gleich aufgebauter Subsysteme möglich, diese durch die in kabelseitigen Steckteilen gespeicherten Informationen zu individualisieren, was beispielsweise bei der Kommunikation über ein gemeinsames Kommunikationsnetzwerk den Initialisierungsaufwand (Taufe) vermindert.
- Wird eine neue Kombinationen von Hardware- und Softwareversionen beglaubigt freigegeben, so ist sie mittels des Servicegerätes dem Mikroprozessor im Steckteil zur Verfügung stellbar, der sie intern korrekt abspeichert. Das Servicegerät ist so eingerichtet, dass bei dessen Verwendung ebenfalls ein Autorisationsvorgang und eine Plausibilisierung stattfindet, so dass keine unerlaubte Änderung der schlüsselgeschützten Tabelle der zulässigen Kombinationen von Hardware- und Softwareversionen und der Liste der Konfigurationsparameter möglich ist, die an sich beide sicherheitsrelevant sind.
- Wird eine neue Softwareversion auf das Gerät hinuntergeladen, so kann der Download-Agent ebenfalls bei der kabelseitigen Intelligenz die Informationen aus der erweiterbaren Tabelle der zulässigen Kombinationen von Hardware- und Softwareversionen erfragen und eine Vorabüberprüfung durchführen, so dass bereits in diesem Stadium ein Download unpassender Software verhindert werden kann.

### Ausführungsbeispiel zur Inbetriebnahme und zum Testen komplexer Netzwerke

Netzwerke, z. B. solche für die Automatisierungstechnik und/oder solche, wie sie in Automobilen, Eisenbahnen oder in Flugzeugen zu finden sind, können äusserst komplex aufgebaut sein, z. B. dann, wenn aufgrund der Unterschiedlichkeit der angeschlossenen Geräte und/oder des Fehlens geeigneter Normen unterschiedliche Kabel eingesetzt werden müssen. Ebenso wird die Gesamtverkabelung in der Regel nicht durch einzelne (ein- oder mehradrige) Kabel mit einer 1:1 Beziehung erstellt, sondern es werden mehrere Kabel und gegebenenfalls auch einzelne Adern zu Kabelbündeln (Kabelbaum) zusammengefasst, so dass sich damit eine n:m Beziehung ergibt. Diese Kabelbäume werden oft vorkonfektioniert und als Ganzes zu einem geeigneten Montagezeitpunkt in der Anlage installiert. Auch wenn diese Kabelbäume als Vormontageelemente bereits vorkonfektioniert und vorausgetestet sein können, ist in der Regel während der Inbetriebnahme eine Punkt-zu-Punkt Verbindungskontrolle jeder einzelnen Kabeldrahtader ("Ausläuten") zwingend notwendig. Im einfachsten Fall wird damit lediglich die ohmsche Verbindung von einem Anschlusspunkt eines bestimmten Gerätesteckers über das kabelseitige Steckteil an den Anschlusspunkt eines geräteseitigen Steckers eines peripheren Gerätes wie Aktuator oder in umgekehrter Richtung von einem Sensor zu einem verarbeitenden Gerät getestet. In komplexeren Prüfverfahren werden bestimmte Quellen an den Stecker geschaltet und am entfernten Ende die Signalqualität bestimmt oder die Funktionalität des angeschlossenen Peripheriegerätes kontrolliert.

Während der Erstinbetriebnahmephase des Gesamtsystems sind somit sämtliche Verbindungen für die Steuerung von Peripheriegeräten (Feldgeräten: wie beispielsweise Steuersignale für die als Aktuatoren dienenden Stellglieder und deren Rückmeldesignale sowie Sensoren) auf ihre korrekte Konnektivität hin zu überprüfen. Diese Konnektivität umfasst ihre Kurzschlussfreiheit, ihre Unterbrechungsfreiheit und die Verbindung der richtigen, korrespondierenden Endpunkte. Selbst wenn Kabelbäume bereits vorkonfektioniert eingelegt und vorgeprüft sind, kann auf diese langwierige und doch fehleranfällige Tätigkeit nicht verzichtet werden. Mit Hilfe der "Vor-Ort-Informationen" in den kabelseitigen Steckteilen und ihrer zumindest einseitigen, vollständigen Lösbarkeit von den Geräten lässt sich diese Aufgabe durch eine Teilautomatisierung vereinfachen und beschleunigen.

Fig. 9 zeit eine mögliche Ausführungsform einer Testvorrichtung.

Das Gerät 50 weist eine oder mehrere Gegenstücke 1 als Anschlüsse auf. Im Normalbetrieb ist ein Steckteil 10 in ein Gegenstück 1 eingesteckt, so dass das Gerät 50 über einen Kabelbaum 55 z. B. an einen Sensor oder Aktuator 56 angeschlossen ist.

Die Testvorrichtung weist ein Testgerät 70 sowie ein Messgerät 60 auf. Das Testgerät 70 umfasst einen oder mehrere Anschlüsse 71 von denen mindestens einer so ausgestaltet ist wie ein Anschluss 1 des Geräts 50. Das Steckteil 10 ist somit in einen Anschluss 71 des Testgeräts 70 einsteckbar. Dieses umfasst weiter einen Testgenerator 72 sowie einen Kommunikationsmaster 73. Der Testgenerator 72 ist in dem Sinne universell, als dass er zumindest fähig ist, alle Signalquellen und/oder Lasten zu repräsentieren, welche für die auszutestende Anlagen- und/oder Produktefamilie typisch sind. Er ist typischerweise so einrichtbar, dass er nur generische Routinen aufweist und weder anlagen- oder gerätespezifische Informationen noch Parameter enthält, da diese z. B. bereits während der Kabelkonfektionierung in die kabelseitigen Steckteilen 10 abgespeichert worden sind und damit von dort bezogen werden.

Das Messgerät 60 ist mobil ausgestaltet und weist eine Messeinrichtung 62 sowie einen Kommunikationsslave 63 auf. Das Messgerät 60 ist so einrichtbar, dass es nur generische Routinen enthält und keine Parameter, die den Test definieren, da diese vom Testgerät 70 bereitgestellt werden.

Kommunikationsmaster 73 und Kommunikationsslave 63 sind zum Aufbau einer Kommunikationsbeziehung 65 eingerichtet, welche vorzugsweise drahtlos erfolgt.

Während des Testes wird das Testgerät 70 anstelle des Gerätes 50 an den Kabelbaum 55 angeschlossen. Mit dem Messgerät 60 wird zusammen mit dem Testgerät 70 die Konnektivität des Kabelbaumes 55 und/oder die Funktionalität der übrigen angeschlossenen Geräte überprüft.

Alternativ zu dieser Ausprägung kann die Testvorrichtung aus Testgerät 70 und Messgerät 60 so universalisiert werden, dass sie gleich ausgebildete Einrichtungen bilden, die jeweils in Abhängigkeit der Konfiguration entweder die Rolle des Messgeräts übernehmen können oder diejenige des Testgeräts. Ebenso ist die Testvorrichtung so auslegbar, dass die Zuweisung der Master- oder Slave-Funktionalität der beiden Geräte 60, 70 interaktiv wählbar ist.

Weist die Anlage und/oder die Geräte eine sichere Simulations- oder Testbetriebsart auf, so kann auch das angeschlossene Gerät 50 selbst in dieser Betriebsart die Rolle des Testgerätes 70, des Messgerätes 60 oder Teilrollen davon übernehmen.

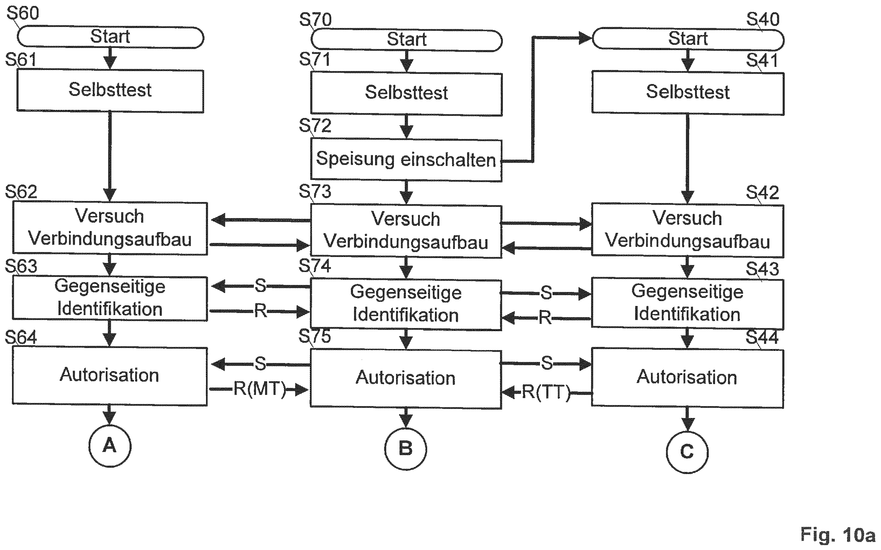

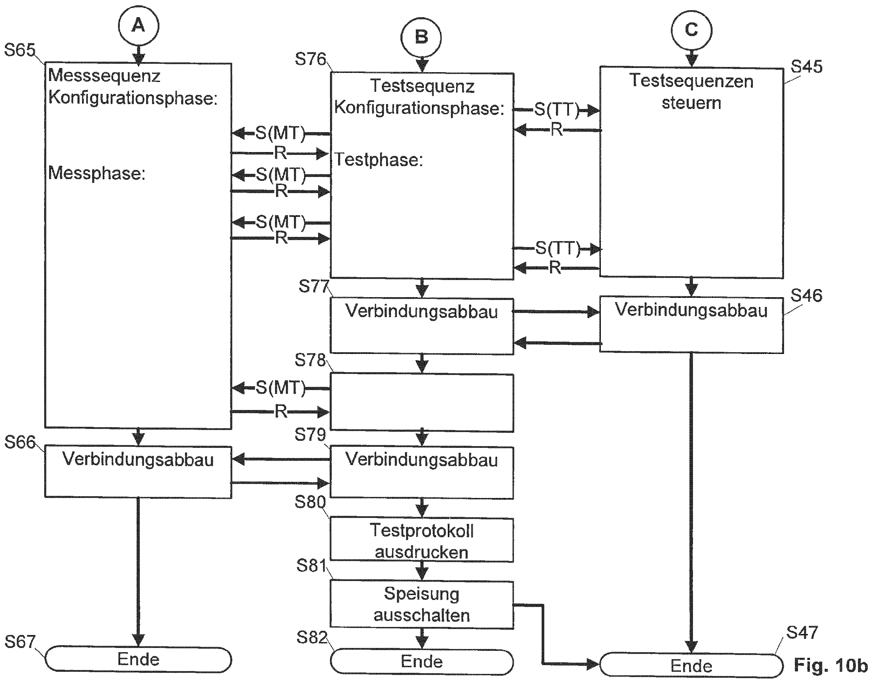

Figuren 10a und 10b zeigen einen beispielhaften Ablauf für das Testen eines Netzwerkes. Dabei bezeichnen S60-S67 die im Messgerät 60, S70-S82 die im Testgerät 70 und S40-S47 die im Steckteil 10 ablaufenden Schritte. Der Übergang von dem letzten Schritt in Fig. 10a zum nächsten Schritt in Fig. 10b ist jeweils durch den eingekreisten Buchstabe A bzw. B bzw. C gekennzeichnet.

Die Abfrage von Informationen durch das Testgerät 70, welche vom Messgerät 60 sowie vom Steckteil 10 geliefert werden, erfolgt z. B. in Art eines Services und ist in den Figuren 10a und 10b durch einen mit "S" (für "Service Request") gekennzeichneten Pfeil angedeutet. Die nachfolgende Antwort des Messgerätes 60 bzw. des Steckteils 10 ist jeweils durch einen mit "R" (für "Response") gekennzeichneten Pfeil angedeutet.

Im Speicher 13 des Steckteils 10 sind u. a. Informationen enthalten, welche definieren, wie die Steckelemente des Steckteils 10, welche z. B. als Pins vorliegen, über den Kabelbaum 55 mit anderen Steckelementen zu anderen Steckteilen 10 zugeordnet sind. Diese Informationen sind z. B. wie folgt bereitstellbar:
Aufgrund der mit dem CAD erfassten Schaltpläne wird direkt aus dem CAD eine Netzliste generiert. Diese Netzliste beschreibt vollständig, welche Verbindung von welchem Stift eines Steckers zu welchem Stift eines anderen Steckers an einem anderen Ort realisiert werden muss. (Der jeweilige Stecker ist dabei durch das Steckteil 10 oder das Gegenstück 1 an einem Gerät 50 realisiert.)

Aus der Netzliste wird durch Umgruppierung der darin enthaltenen Information eine Stecker bezogene Liste erstellt.

Diese Stecker bezogene Liste wird (typischerweise bereits während der Kabelbaumvorkonfektionierung) zusammen zumindest mit einer steckerspezifischen Signatur in den nichtflüchtigen Speicher 13 des Steckteils 10 programmiert. Ebenso wird der Ort, wo sich der Stecker innerhalb der Anlage befindet, und auch die Art und Weise, wie die Verbindung getestet werden soll, sowie weitere relevante Informationen (z. B. der Ort, wo gemessen werden soll) abgespeichert.

Diese Liste repräsentiert die "Liste der Testsequenzen".

Damit sind alle Informationen (inklusive des Stecker-Identifikators), die für ein Austesten der Verkabelung bei der Erstinbetriebnahme der Anlage notwendig sind, in den kabelseitigen Steckteilen 10 vorhanden.

Die einzelnen Schritte gemäss Figuren 10a und 10b sind nun wie folgt:
Selbsttestphase: Wird das Testgerät 70 eingeschaltet, Schritt S70 in Fig. 10a, führt es einen Selbsttest durch, Schritt S71, und ist danach grundsätzlich für das Durchführen von Testvorgängen bereit.

Das eigentliche Austesten des Kabelbaumes 55 einer Anlage beginnt mit dem ersten Einstecken eines ersten Steckteils 10 in das Testgerät 70.

Das Testgerät 70 schaltet die Energieversorgung für die kabelseitige Intelligenz des Steckteils 10 ein, Schritt S72.

Nach dem Selbsttest der Intelligenz 20 des kabelseitigen Steckteils 10 nimmt dieser am Kommunikationsaufbau mit dem Testgerät 70 teil, Schritt S42 und S73. Eine Kommunikation kommt zustande.

Identifikationsphase: Testgerät 70 und die Intelligenz 20 des Steckteils 10 tauschen ihre Signaturen aus, Schritt S43 und S74.

Autorisierungsphase: Die Intelligenz 20 des Steckteils 10 erkennt das Gerät aufgrund dessen Signatur als ein passendes Testgerät 70 und autorisiert dieses auf seine Liste der Testsequenzen zuzugreifen. Das wird dem Testgerät 70 durch ein exklusives Test-Token (in Fig. 10a mit "TT" gekennzeichnet) signalisiert, Schritt S44 und S75.

In analoger Weise führt das Messgerät 60 nach dem Einschalten einen Selbsttest durch (Schritt S60 und S61), baut eine Verbindung mit dem Testgerät 70 auf (Schritt S62 und S73) und tauscht mit dem Testgerät 70 seine Signatur aus (Schritt S63 und S74). Die nachfolgende Autorisationsphase zwischen den Geräten 60 und 70 verläuft analog wie zwischen Testgerät 70 und Steckteil 10 (Schritt S64 und S75). Anstelle eines Test-Tokens TT erhält das Testgerät 70 ein Mess-Token (in Fig. 10a mit "MT" bezeichnet), das es jeweils zur Autorisation bei Serviceanfragen an das Messgerät 60 verwendet.

Haben alle drei Einheiten (Messgerät 60, Testgerät 70 und Steckteil 10) die Autorisationsphase abgeschlossen, so ist das Gesamtsystem bereit zu einem ersten Messvorgang:
Das Testgerät 70 ist im Besitz des Test-Tokens TT und kann so von der Intelligenz 20 des kabelseitigen Steckteils 10 Testsequenzen verlangen. Ohne Test-Token TT liefert die Intelligenz 20 des Steckteils 10 keine Testsequenz-Instruktionen. Als Antwort auf eine Testsequenzanforderung liefert die Intelligenz 20 des Steckteils 10 nun eine (erste) Testsequenz.

Zur Steuerung der Testsequenzen beim Schritt S45 führt demnach das Steckteil 10 jeweils folgende Teilschritte durch: Überprüfen des TT, Lesen der ersten bzw. nächsten Testsequenz aus einer Tabelle und Serviceanfrage S(TT) des Testgeräts 70 beantworten.

Jede Testsequenz beim Schritt S76 umfasst eine Konfigurationsphase und eine Testphase, die jeweils folgende Teilschritte aufweisen:
Konfigurationsphase:
   - Anfordern Testsequenz und Interpretieren
   - Eigenkonfiguration
   - Auslösen der Mess-Aktion
   - Übermitteln der Messwert-Erwartung
Testphase:
   - Einschalten des Testsignals
   - Empfangen des Messresultats
   - Plausibilisieren des Messresultats und eventuell Wiederholen
   - Protokollieren des Messwertes
   - Ausschalten des Testsignals
   - Verlangen einer neuen Testsequenz oder Verlassen des Blocks S76

Die Messsequenz beim Schritt S65 umfasst eine Konfigurationsphase und eine Messphase, die jeweils folgende Teilschritte aufweisen:
Konfigurationsphase:
   - Überprüfen des Mess-Token MT
   - Darstellen der vom Benützer erwarteten Aktion
   - Vorbereitung der Messung (Konfiguration)
   - Abwarten der Quittierung durch den Benutzer
Messphase:
   - Überprüfen des Mess-Token MT
   - Durchführen der Messung
   - Übermitteln des Messresultats
   - Darstellen des Messresultats

Der Ablauf beim Schritt S76 und S65 ist im Detail wie folgt:
Während der Konfigurationsphase:
a.interpretiert das Testgerät 70 eine Testsequenz-Instruktion,
b.konfiguriert sich das Testgerät 70 entsprechend dieser Instruktion (z. B. nicht als Stromquelle, sondern als Spannungsquelle mit bestimmtem Spannungspegel und/oder Strombegrenzung und/oder weiteren, typischen Parameterwerten, die Teil der Testsequenzbeschreibung sind),
c.kommuniziert das Testgerät 70 mit dem Messgerät 60 und instruiert dessen Benützer über die Aktion, die er zu unternehmen hat (z. B.: "an einem bestimmten Kontaktstift eines bestimmten Steckers das Signal messen"),
d.meldet das Testgerät 70 dem Messgerät 60 den erwarteten Messwert, auf dass das Messgerät 60 sich korrekt konfigurieren kann. (Das Testgerät 70 autorisiert sich dabei mit dem Mess-Token MT gegenüber dem Messgerät 60.)
e.erwartet das Testgerät 70 vom Messgerät 60 als Antwort die Bereitschaftsmeldung, dass das Messgerät 60 sich fertig konfiguriert hat (z. B.: Messbereichswahl) und der Benützer des Messgeräts 60 diese verlangte Aktion beim und am Messpunkt quittiert hat,
f.geht das Testgerät nach Erhalt der Quittierung in die Testphase über.

In der Testphase
a.schaltet das Testgerät 70 das vorkonfigurierte Testsignal auf den gemäss aktueller Testsequenz-Instruktion verlangten Kontaktstift des eingesteckten Steckteils 10,
b.signalisiert das Testgerät 70 dem Messgerät 60 diese Messung tatsächlich durchzuführen,
c.empfängt das Testgerät 70 den vom Messgerät 60 gemessenen Messwert als Antwort auf diese Serviceanfrage S(MT),
d.vergleicht das Testgerät 70 den Messwert mit dem erwarteten Wert,
e.orientiert das Testgerät 70 über das Messgerät 60 den Benützer über das Messresultat und veranlasst ihn im Fehlerfall zur Wiederholung der Messung,
f.protokolliert das Testgerät 70 das definitive Messresultat,
g.schaltet das Testgerät 70 nach durchgeführter Messung das Testsignal ab,
h.verlangt das Testgerät 70 die nächste Testsequenz-Instruktion von der Intelligenz 20 des kabelseitigen Steckteils 10,
i.springt das Testgerät 70 nach Erhalt einer neuen Testsequenz-Instruktion zurück in die Konfigurationsphase. Erhält jedoch das Testgerät 70 anstelle einer neuen Testsequenz-Instruktion eine Mitteilung mit einem Abbruchkriterium, verlässt es diese Schlaufe der Ausführung von Testsequenzen eines Steckteils (innere Iterationsschlaufe).

Das Austesten eines Steckteils 10 endet somit, wenn das Testgerät 70 keine Testsequenz-Instruktion mehr erhält, sondern eine Mitteilung mit einem Abbruchkriterium.

Aufgrund dieses Abbruchkriteriums veranlasst das Testgerät 70 die Intelligenz 20 des Steckteils 10, die Testsequenzsteuerung zu verlassen. Damit verliert das während der Autorisationsphase ausgestellte Test-Token TT seine Gültigkeit. Mit dem Verlassen des Testsequenzblockes S76 wird auch die Kommunikationsbeziehung mit dem kabelseitigen Steckteil abgebrochen (Schritt S77 und S46), nicht aber diejenige mit dem Messgerät 60.

Das in das Testgerät 70 eingesteckte Steckteil 10 kann danach vom Testgerät 70 entfernt und in das Gerät 50 eingesteckt werden.

Ein nächstes Steckteil 10 kann danach in das Testgerät 70 eingesteckt werden und die Prozedur beginnt wieder beim Schritt S40 für das neue Steckteil 10 (Iteration über die Stecker := äussere Iterationsschlaufe) mit dem Starten, dann Selbsttest des kabelseitigen Steckteils 10, gefolgt vom Aufbau der Kommunikation, der Identifikationsphase, der Autorisationsphase und danach dem Abarbeiten der Testsequenzen und weiter.

Weist der Kabelbaum 55 Steckteile auf, die keine Intelligenz in der Art der Intelligenz 20 des Steckteils 10 enthalten, so sind die entsprechenden Adern konventionell auszutesten.

Danach ist der Kabelbaum 55 einer Anlage ausgetestet.

Mit dem Verlassen der äusseren Iterationsschlaufe beim Schritt S78 wird auch das Messgerät 60 wieder in seinen Startzustand versetzt und die Kommunikationsbeziehung zwischen Messgerät 60 und Testgerät 70 abgebrochen, Schritt S66 und S79.

Die Dokumentierung des Testes erfolgt z. B. durch Ausdruck eine Testprotokolls, Schritt S80.

Das oben beschriebene Testen eines Netzwerkes hat u. a. folgende Vorteile:
- Reduktion in der Fehleranfälligkeit der Testabläufe
- reduzierte Zahl an Inbetriebsetzer notwendig; unter Umständen kann sogar eine einzelne Person das Austesten durchführen
- erhebliche Verkürzung der Inbetriebsetzungszeit
- erhöhte Qualität
- protokollierte und nachvollziehbare Überprüfung eines Netzwerkes jeder Anlage bei Serienproduktion
- Nach Abschluss der Inbetriebnahme kann ein vollständiges Testprotokoll ausgedruckt werden und zuhanden der Qualitätssicherung archiviert werden. Die Protokollierung ist damit automatisch durchgeführt und anlagenspezifisch dokumentiert.

Konzeption und Vorteile der hier beschriebenen Gegenstände sind wie folgt zusammenfassbar:
Es ist ein intelligentes Steckteil bereitstellbar, das bei Automatisierungsanlagen oder ähnlichen Systemen bei steckbaren Verbindungen von Kabelbäumen zu Geräten implementierbar ist, und das fähig ist, die Korrektheit der Subsystemverdrahtung zu plausibilisieren, Testsequenzen für das Ausmessen auch einzelner Kabeladern zu steuern sowie geforderte Gerätekonfigurationen in Hardware und Software zu überprüfen und die Korrektheit der Konfiguration durch sicheres Blockieren der normalen Betriebsweise zu erzwingen. Ebenso ist das Steckteil fähig, die Anforderungen an die anzuschliessenden Quellen und Lasten zu beschreiben.

Im Gegensatz zu den üblichen Steckteilen können dem erfindungsgemässen Steckteil aufgrund seiner Intelligenz zumindest halbautonome Funktionen zugewiesen werden. Dadurch sind weitergehende Überprüfungen als üblich möglich.

Informationen, insbesondere solche, die bereits in elektronischer Form vorhanden sind, können im Speicher des erfindungsgemässen Steckteils gespeichert und so nutzbar gemacht werden. So werden z. B. während einer modernen Anlagenprojektierung mittels CAD-Werkzeugen (z. B. Elektro-CAD) Stromlaufpläne, Klemmenpläne und Ähnliches erstellt, die die Funktionalität beschreiben und die somit in elektronischer Form verfügbar sind. Damit ist auch die Aufgabe der Kabelbäume, welche Geräte, wie, und mit welchen anderen Geräten zu verbinden sind, als Netzliste bereitstellbar. Ebenso lassen sich aus Gerätebeschreibungen und Geräte-Datenblättern die charakteristischen Eigenschaften der verwendeten Geräte extrahieren und elektronisch darstellen.

Das hier beschriebene Steckteil bildet eine Intelligenz, die sich "vor Ort" befindet und die notwendigen Informationen, Verarbeitungsmöglichkeiten und Kommunikationsfähigkeit zur Verfügung stellt, um z. B.:
- den Kabelbaum über eine Signatur erkennen zu können,
- das Steckteil über eine Signatur erkennen zu können,
- das Gerät über eine Signatur erkennen zu können,
- eine Plausibilitätsprüfung - ob Stecker und Kupplung gemäss erstelltem Stromlaufplan zusammengehören - zu ermöglichen,
- eine Beschreibung, was für eine Quelle eine bestimmte Kabelader (Stecker-Stift) von der Gegenseite aus erwartet, zu ermöglichen, und umgekehrt,
- eine Beschreibung, was für eine Last über eine bestimmte Kabelader (Stecker-Buchse) zu treiben ist, zu ermöglichen,
- bei sicherheitsrelevanten Anwendungen mit explizit begutachteten und zertifizierten Geräte-Hardware-Software-Kombinationen, z. B. für erhöhte Sicherheitsansprüche mit einer Sicherheitsanforderungsstufe SIL > 1, eine sichere und zertifizierte Kombination von Hardware-SoftwareKomponenten anhand der im Steckteil gespeicherten, notwendigen Geräte-Änderungsstände und der dazu passenden notwendigen Softwareversion auch erzwingen zu können,
- eine Testsequenz für das Ausmessen und die Inbetriebnahme des Gesamtsystems "Anlage", insbesondere des Kabelbaumes zu steuern oder zumindest aufgrund seiner abgespeicherten Informationen beeinflussen zu können,
- ein Gerät (Betriebsmittel) zu konfigurieren, zum Beispiel dem Festlegen des Quellen-Typs (Spannungsquelle oder Stromquelle) auch in Abhängigkeit des angeschlossenen Feldgerätes, von Filtercharakteristiken, von Skalierungsgrössen wie Verstärkungsfaktoren, der Vergabe von Adressen für die Kommunikation, etc.
- diese Konfiguration in Abhängigkeit des gegebenen Hardware-Änderungsstandes und Software-Versionenstandes durchführen zu können,
- diese Konfiguration in Abhängigkeit der Betriebsart (Messbetrieb, Normalbetrieb, Simulationsbetrieb) durchführen und ändern zu können.

Kurzum: Diese nicht abschliessende Liste zeigt, dass das Interface des trennbaren Systems "Gerät → Kupplung ← → Stecker → Kabelanfang → Kabelende → Kupplung ← → Stecker → Last" wie auch des Gerätes und der Last selbst detailliert beschrieben werden kann und ermöglicht damit ein weitgehendes Austesten des Gesamtsystems in autonomer Art, ohne dabei den an sich passiven Charakter eines Kabelbaumes zu beeinträchtigen.

Damit ersetzt oder ergänzt dieses Konzept z. B. eine simple, mechanische Kodierung von Steckern, ermöglicht die Konfiguration der angeschlossenen Geräte (z. B: Adressvergabe kommunikativer Systeme, Einstellung notwendiger Filter-Parameter, Bestimmung der Art von Signal- oder Energiequellen [Stromquellen- oder Spannungsquellencharakter, etc.]) mit Hilfe elektronischer Elemente, so dass elektromechanische Elemente wie Drehschalter oder Drahtbrücken entfallen können. Dabei ist es möglich, diese Art von Adress-, Konfigurations-, Parameter und Test-Informationen weder implizit in der Ausführungssoftware des Gerätes noch im Gerät selbst abgespeichert vorzusehen, sondern ausserhalb des Gerätes. Die Intelligenz ist somit in das Steckteil verlagert, um so aktive Steuerfunktionen übernehmen zu können oder die gespeicherten Daten zugriffsgeschützt zu speichern.

Es ergibt sich damit u. a. folgender Nutzen:
- Flexibilität bei zukünftigen Änderungen
- Steigerung der Personensicherheit
- Schutz vor Materialschäden
- Vereinfachung von Inbetriebnahme-Abläufen
- Automatisierung von Fehlersuch-Prozessen und damit Kosten- und Zeitersparnisse
- langfristige Sicherstellung der Konformität zertifizierter Gesamtsystemkombinationen

## Patentansprüche

1. Steckteil (10), welches zur Bildung einer Steckverbindung mit einem Gegenstück (1) verbindbar ist, das als Anschluss eines Gerätes (50) dient, mit mindestens einem nichtflüchtigen Speicher (13), einer Kommunikationseinheit (15), einem Mikroprozessor (14) und mit einem vom Steckteil abgehenden Kabel (12) als Anschluss an ein Netzwerk, **dadurch gekennzeichnet, dass** im Speicher (13) Informationen gespeichert sind, welche zur Autorisierung eines Betriebs des Gerätes zulässige Kombinationen von Hardware- und Softwareversionen enthalten.

2. Steckteil nach Anspruch 1, wobei im Speicher (13) Software zum Steuern des Gerätes (50) gespeichert ist.

3. Steckteil nach einem der vorangehenden Ansprüche, welches eingerichtet ist, eine Kommunikation mit dem Gerät (50) auch eigenständig zu initiieren.

4. Steckteil nach einem der vorangehenden Ansprüche, welches eingerichtet ist, im Speicher (13) gespeicherte Informationen und/oder vom Gerät (50) übermittelte Informationen auszuwerten, um Steuersignale zu erzeugen, welche das Gerät (50) für den Betrieb freigeben oder sperren und/oder welche das Gerät (50) für den Betrieb konfigurieren.

5. Steckteil nach Anspruch 4, wobei das Gerät (50) verschiedene Betriebsarten aufweist und die erzeugten Steuersignale dazu dienen, das Gerät für mindestens eine Betriebsart, bevorzugt alle Betriebsarten wahlweise freizugeben oder zu sperren und/oder das Gerät (50) für mindestens eine Betriebsart, bevorzugt alle Betriebsarten zu konfigurieren.

6. Steckteil nach einem der vorangehenden Ansprüche, wobei im Speicher (13) mindestens eine der folgenden Informationen gespeichert ist:
- Konfigurationsparameter, die für das Starten und/oder den Betrieb des Gerätes (50) benötigt werden,
- Versionenstand der Hardware des Geräts (50),
- Versionenstand der Software des Geräts (50),
- zulässige Kombinationen von Hardware- und Softwareversionen, wobei diese Kombinationen zertifiziert sind,
- Typ des Gerätes (50) zur Definition seiner Funktionalität, wobei vorzugsweise der Typ mindestens eines der folgenden Geräte definiert: Automatisierungsgerät, Feldgerät, Testgerät (70) zur Erzeugung von auf ein Netzwerk legbaren Testsignalen, Messgerät (60) zum Erfassen von durch die Testsignale erzeugten Messsignalen,
- Konfigurationsparameter zur Konfiguration des Geräts (50) als Testgerät (70) und/oder Messgerät (60),
- mindestens ein Auswertealgorithmus zur Auswertung von im Speicher (13) gespeicherten Daten und/oder von vom Gerät (50) übermittelten Daten,
- Informationen über ein Netzwerk, wobei das Gegenstück (1) des Geräts (50) als Anschluss an das Netzwerk dient, wobei die Informationen über das Netzwerk insbesondere umfassen: Anfangs- und Endpunkte im Netzwerk der vom Steckteil (10) abgehenden Kabeladern und Informationen über die durch diese Kabeladern in Verbindung stehenden Quellen und Lasten,
- eine Signatur zur eindeutigen Identifikation des Steckteils (10),
- mindestens ein Steuerungsalgorithmus zum Austesten eines Netzwerks, insbesondere Kabelbaums,
- Tabelle von Testsequenzen, welche zumindest definiert: auszumessende Punkte in einem Netzwerk, Auslegung der Testsignale in Abhängigkeit dieser Punkte, Sollmesswerte, Kriterien, welche die zulässigen Abweichungen der von den Testsignalen erzeugten Messsignale von den Sollmesswerten festlegen.

7. Steckteil nach einem der vorangehenden Ansprüche, wobei im Speicher (13) Informationen gespeichert sind, welche gekapselt sind, so dass sie durch das Gerät (50) nicht direkt lesbar sind, und/oder welche schlüsselgesichert sind.

8. Steckteil nach Anspruch 7, wobei die gekapselten und/oder schlüsselgesicherten Informationen durch eine Serviceanfrage des Geräts (50) erst zugänglich sind, nachdem das Steckteil (10) ein Token an das Gerät (50) zurück übermittelte, um dadurch vorzugsweise die Zugriffsmöglichkeiten des Gerätes (50) auf die Informationen im Speicher (13) und/oder die zugelassenen Betriebsarten des Gerätes (50) festzulegen.

9. Steckteil nach einem der vorangehenden Ansprüche, welches Mittel (16) aufweist zum drahtgebundenen oder drahtlosen Transfer von Informationen zum Gerät (50), vorzugsweise zum Gegenstück (1).

10. Steckteil nach einem der vorangehenden Ansprüche, welches einen Energieempfänger (17) zur Energieversorgung des Steckteils (10) via das Gegenstück (1) aufweist, wobei der Energietransfer vom Gegenstück (1) zum Steckteil (10) drahtlos oder drahtgebunden ist und wobei vorzugsweise das Steckteil (10) frei von einer Energiequelle ist.

11. Verfahren zum Programmieren eines Steckteils nach einem der vorangehenden Ansprüche, in welchem im Speicher (13) des Steckteils (10) gespeicherte Informationen gelesen und/oder verändert werden und/oder im Speicher (13) Informationen abgelegt werden, wobei die gespeicherten bzw. abgelegten Informationen zulässige Kombinationen von Hardware- und Softwareversionen zur Autorisierung eines Betriebs des Gerätes enthalten.

12. Anordnung mit Kabeln, insbesondere Kabelbaum, an welche Steckteile (10) gemäss einem der Ansprüche 1 bis 10 angeschlossen sind.

13. Anordnung mit mindestens einem Steckteil nach einem der Ansprüche 1 bis 10 und einem Gerät (50), das mindestens ein Gegenstück (1) zur Bildung einer Steckverbindung mit dem Steckteil (10) aufweist.

14. Anordnung nach Anspruch 13, wobei das Gerät (50) eine oder mehrere Betriebsarten aufweist und wobei im Speicher (13) des Steckteils (10) Informationen gespeichert sind, welche durch den Mikroprozessor (14) des Steckteils (10) auswertbar sind, um das Gerät (50) für jeweils eine bestimmte Betriebsart freizugeben oder zu sperren und/oder um das Gerät (50) zu konfigurieren.

15. Anordnung nach einem der Ansprüche 13 bis 14, wobei eine im Speicher (13) des Steckteils (10) gespeicherte Steckteil-Signatur (Sig10) eine eindeutige Identifikation des Steckteils (10) ermöglicht, wobei die Steckteil-Signatur vorzugsweise ebenfalls zur Überprüfung der korrekten Zuweisung von Steckteil (10) und Gegenstück (1) verwendbar ist, und wobei im Gerät (50) eine Geräte-Signatur (Sig50) gespeichert ist, die seine eindeutige Identifikation ermöglicht, wobei vorzugsweise das Steckteil (10) eingerichtet ist, nach Erhalt der Geräte-Signatur und deren Überprüfung dem Gerät (50) ein dem Resultat der Überprüfung entsprechendes Token (IDT) zu übermitteln, um dem Gerät (50) im Speicher (13) des Steckteils (10) gespeicherte Informationen zugänglich zu machen.

16. Anordnung nach einem der Ansprüche 13 bis 15, wobei das Gerät (50) für einen Normalbetrieb ausgelegt ist und wobei im Speicher (13) des Steckteils (10) eine Liste von zulässigen Kombinationen von Hardware-Software-Versionen und im Gerät (50) Geräteinformationen von seiner aktuellen Hardware und Software gespeichert sind, wobei das Steckteil (10) oder das Gerät (50) eine Softwareeinheit aufweist, welche vorzugsweise unveränderlich und zertifiziert ist, wobei die Softwareeinheit eingerichtet ist, die Geräteinformationen über die aktuelle Hardware-Software-Kombination (AK) mit der Liste zu vergleichen und auf ihre Zulässigkeit hin zu überprüfen, wobei das Gerät (50) vorzugsweise so eingerichtet ist, dass es ohne Überprüfung der Zulässigkeit und deren Bestätigung nicht in den Normalbetrieb übergehen kann.

17. Anordnung nach Anspruch 16, wobei Steckteil (10) und Gerät(50) so eingerichtet sind, dass während einer Autorisationsphase ein Token (AT) vom Steckteil (10) zum Gerät (50) übermittelt wird, mit Hilfe dessen die weiteren Servicezugriffe des Gerätes (50) auf die Informationen im Speicher (13) des Steckteils (10) autorisiert werden.

18. Anordnung nach einem der Ansprüche 13 bis 17, wobei im Speicher (13) des Steckteils (10) gekapselte und/oder schlüsselgesicherte Informationen gespeichert sind, vorzugsweise in einer erweiterbaren Liste, und wobei das Gerät ein Lese- und/oder Schreibgerät ist, welches zum Lesen, Ändern und/oder Ergänzen dieser Informationen eingerichtet ist.

19. Anordnung nach einem der Ansprüche 13 bis 18, wobei im Gerät (50) eine Startsoftware gespeichert ist, die das Starten des Gerätes festlegt und die festlegbare Parameter aufweist, die im Speicher (13) des Steckteils (10) gespeichert sind.

20. Anordnung nach einem der Ansprüche 13 bis 19, wobei das Gegenstück (1) des Gerätes (50) eine oder mehrere der folgenden Eigenschaften aufweist:
- das Gegenstück (1) dient als Anschluss an ein Netzwerk,
- das Gegenstück (1) dient als Anschluss zur Konfiguration des Gerätes (50), so dass dieses einen weiteren Anschluss an ein Netzwerk aufweist,
- das Gegenstück (1) steht in Wirkverbindung mit einem Mikroprozessor (4) des Gerätes (50),
- das Gegenstück (1) ist an einem Gehäuse des Gerätes (50) angeordnet.

21. Verfahren zum Betrieb eines Geräts, in welchem mindestens eine der folgenden Komponenten verwendet wird:
- ein Steckteil nach einem der Ansprüche 1 bis 10,
- ein Anordnung nach Anspruch 12,
- eine Anordnung nach einem der Ansprüche 13 bis 20,
wobei zur Autorisierung des Betriebs des Gerätes das Steckteil vom Gerät Informationen zu den aktuell verwendeten Hardware- und geladenen Softwarekomponenten empfängt und anhand der im Speicher des Steckteils gespeicherten Informationen, welche die zulässigen Kombinationen von Hardware- und Softwareversionen enthalten, überprüft.

22. Anlage in einem Flugzeug oder Fahrzeug, insbesondere schienengebundenen Fahrzeug oder Kraftfahrzeug, welche mindestens eine der folgenden Komponenten umfasst:
- ein Steckteil nach einem der Ansprüche 1 bis 10,
- ein Anordnung nach Anspruch 12,
- eine Anordnung nach einem der Ansprüche 13 bis 20.

23. Anordnung mit mindestens einem Steckteil (10) nach einem der Ansprüche 1 bis 10 und einer Testvorrichtung zum Austesten eines Netzwerks, welches mehrere der Steckteile (10) aufweist, die Teil einer Anordnung nach Anspruch 12 oder einem der Ansprüche 13 bis 20 oder einer Anlage nach Anspruch 22 sind, wobei die Testvorrichtung mindestens ein Gegenstück (71) zur Bildung einer Steckverbindung mit einem Steckteil (10) aufweist und eingerichtet ist, aus Informationen, welche im Speicher (13) eines Steckteils (10) gespeichert sind, Testsignale zu erzeugen, welche auf die vom Steckteil (10) abgehenden Kabeladern legbar sind zur Erzeugung von Messsignalen.

24. Anordnung nach Anspruch 23, in welcher ein Testprogramm zur Erzeugung der Testsignale gespeichert ist, das zu dessen Durchführung Konfigurationsparameter benötigt, wobei diese Konfigurationsparameter mittels im Steckteil (10) gespeicherten Informationen festlegbar sind.

25. Anordnung nach einem der Ansprüche 23 bis 24, welche eingerichtet ist, Informationen, welche Sollmesswerte enthalten, vom Steckteil (10) zu erfragen, die durch die Testsignale erzeugten Messsignale zu empfangen und mit den Sollmesswerten zu vergleichen und bei vorgegebenen Abweichungen ein Fehlersignal zu erzeugen.

26. Anordnung nach einem der Ansprüche 23 bis 25, die ein Testgerät (70), welches das mindestens eine Gegenstück (71) aufweist, und ein Messgerät (60) umfasst, um an bestimmten Stellen des Netzwerks Messungen durchzuführen, wobei vorzugsweise das Messgerät (60) in Bezug auf das Testgerät (70) mobil ist und/oder wobei vorzugsweise Testgerät (70) und Messgerät (60) zur drahtlosen Informationsübertragung eingerichtet sind.

27. Anordnung nach Anspruch 26, wobei das Messgerät (60) Ausgabemittel, z. B. ein Display, aufweist zur Angabe von Anweisungen an einen Benutzer und Eingabemittel zur Eingaben von Informationen durch den Benutzer.

28. Anordnung nach einem der Ansprüche 26 bis 27, wobei zumindest eines der am Netzwerk angeschlossenen Geräte (50) zumindest einen Normalbetrieb und einen Testbetrieb aufweist, wobei das Gerät (50) im Testbetrieb als Testgerät (70) oder Messgerät (60) dient.

29. Anordnung nach einem der Ansprüche 23 bis 28, welche eingerichtet ist, ein Protokoll über den Testablauf zu erstellen und aus der Testvorrichtung auszulagern.

## Claims

1. Plug part (10) that is connectable to a mating part (1) for forming a plug-in connection, the mating part being used as a connector of a device (50), comprising at least one nonvolatile memory (13), a communication unit (15), a microprocessor (14) and a cable (12) leading out from the plug part as a connector to a network, **characterized in that** information is stored in the memory (13), which, for authorizing operation of the device, comprises permissible combinations of hardware and software versions.

2. Plug part according to claim 1, wherein software for controlling the device (50) is stored in the memory (13).

3. Plug part according to one of the preceding claims, which is configured for initiating, also autonomously, communication with the device (50).

4. Plug part according to one of the preceding claims, which is configured for evaluating information that is stored in the memory (13) and/or transmitted by the device (50) in order to generate control signals which enable or block the device (50) for operation and/or which configure the device (50) for operation.

5. Plug part according to claim 4, wherein the device (50) has various operating modes, and the generated control signals are used to selectively enable or block the device for at least one operating mode, preferably all operating modes, and/or to configure the device (50) for at least one operating mode, preferably all operating modes.

6. Plug part according to one of the preceding claims, wherein at least one of the following pieces of information is stored in the memory (13):
- configuration parameters that are required for starting and/or operating the device (50),
- version of the hardware of the device (50),
- version of the software of the device (50),
- permissible combinations of hardware and software versions, these combinations being certified,
- the type of device (50) for defining its functionality, wherein preferably the type defines at least one of the following devices: automation device, field device, test device (70) for generating test signals which may be applied to a network, measuring device (60) for detecting measuring signals generated by the test signals,
- configuration parameters for configuring the device (50) as a test device (70) and/or a measuring device (60),
- at least one evaluation algorithm for evaluating data stored in the memory (13) and/or data transmitted by the device (50),
- information concerning a network, wherein the mating part (1) of the device (50) is used as a connector to the network, wherein the information concerning the network includes in particular: start and end points in the network of the cable wires leading out from the plug part (10), and information concerning the sources and loads that are connected by these cable wires,
- a signature for uniquely identifying the plug part (10),
- at least one control algorithm for testing a network, in particular a cable tree,
- a table of test sequences which defines at least: points in a network to be measured, design of the test signals as a function of these points, setpoint measured values, criteria which establish the permissible deviations of the measuring signals, generated by the test signals, from the setpoint measured values.

7. Plug part according to one of the preceding claims, wherein information is stored in the memory (13), which information is encapsulated, so that it is not directly readable by the device (50) and/or which information is key-protected.

8. Plug part according to claim 7, wherein the encapsulated and/or key-protected information is accessible via a service request by the device (50) only after the plug part (10) has transmitted a token back to the device (50) in order to establish preferably the access options of the device (50) to the information in the memory (13) and/or the permissible operating modes of the device (50).

9. Plug part according to one of the preceding claims, which has means (16) for the wired or wireless transfer of information to the device (50), preferably to the mating part (1).

10. Plug part according to one of the preceding claims, which has an energy receiver (17) for supplying power to the plug part (10) via the mating part (1), wherein the energy transfer from the mating part (1) to the plug part (10) is wireless or wired, and wherein the plug part (10) is preferably free of a power source.

11. Method for programming a plug part according to one of the preceding claims, in which information that is saved in the memory (13) of the plug part (10) is read and/or changed, and/or information is stored in the memory (13), wherein the information changed or stored, respectively, comprises permissible combinations of hardware and software versions for authorizing operation of the device.

12. Arrangement having cables, in particular a cable tree, to which plug parts (10) according to one of claims 1 to 10 are connected.

13. Arrangement having at least one plug part according to one of claims 1 to 10, and a device (50) which includes at least one mating part (1) for forming a plug-in connection with the plug part (10).

14. Arrangement according to claim 13, wherein the device (50) has one or more operating modes, and wherein information is stored in the memory (13) of the plug part (10), the information being evaluatable by the microprocessor (14) of the plug part (10) in order to enable or block the device (50) for a specific operating mode in each case, and/or to configure the device (50).

15. Arrangement according to one of claims 13 to 14, wherein a plug part signature (Sig10) that is stored in the memory (13) of the plug part (10) allows unique identification of the plug part (10), wherein the plug part signature is preferably likewise usable for checking the correct assignment of the plug part (10) and the mating part (1), and wherein a device signature (Sig50) is stored in the device (50), the device signature allowing its unique identification, preferably, the plug part (10) being configured for transmitting to the device (50) a token (IDT), after receiving and checking the device signature, the token corresponding to the result of the check, in order to make information that is stored in the memory (13) of the plug part (10) available to the device (50).

16. Arrangement according to one of claims 13 to 15, wherein the device (50) is designed for normal operation, and wherein a list of permissible combinations of hardware/software versions is stored in the memory (13) of the plug part (10), and device information on its current hardware and software is stored in the device (50), wherein the plug part (10) or the device (50) has a software unit which is preferably unalterable and certified, wherein the software unit is configured for comparing the device information concerning the current hardware/software combination (AK) to the list and checking for its permissibility, wherein the device (50) is preferably configured in such a way that it is not able to go into normal operation without checking the permissibility and its verification.

17. Arrangement according to claim 16, wherein the plug part (10) and the device (50) are configured in such a way that during an authorization phase, a token (AT) is transmitted from the plug part (10) to the device (50), by means of which the further service access of the device (50) to the information in the memory (13) of the plug part (10) is authorized.

18. Arrangement according to one of claims 13 to 17, wherein encapsulated and/or key-protected information is stored in the memory (13) of the plug part (10), preferably in an expandable list, and wherein the device is a reader and/or recording device which is set up to read, modify, and/or supplement this information.

19. Arrangement according to one of claims 13 to 18, wherein start-up software is stored in the device (50), the start-up software specifying the start-up of the device and having definable parameters which are stored in the memory (13) of the plug part (10).

20. Arrangement according to one of claims 13 to 19, wherein the mating part (1) of the device (50) has one or more of the following properties:
- the mating part (1) is used as a connector to a network,
- the mating part (1) is used as a connector for configuring the device (50) so that the latter has an additional connector to a network,
- the mating part (1) is in operative connection with a microprocessor (4) of the device (50),
- the mating part (1) is situated on a housing of the device (50) .

21. Method for operating a device, in which at least one of the following components is used:
- a plug part according to one of claims 1 to 10,
- an arrangement according to claim 12,
- an arrangement according to one of claims 13 to 20,
wherein, for authorizing operation of the device, the plug part receives from the device information on the hardware and loaded software components currently used and checks it based on the information stored in the memory of the plug part and comprising the permissible combinations of hardware and software versions.

22. System in an aircraft or vehicle, in particular a rail vehicle or motor vehicle, which system includes at least one of the following components:
- a plug part according to one of claims 1 to 10,
- an arrangement according to claim 12,
- an arrangement according to one of claims 13 to 20.

23. Arrangement comprising at least one plug part (10) according to one of claims 1 to 10 and a test apparatus for testing a network, which includes several of the plug parts (10), which are part of an arrangement according to claim 12 or one of claims 13 to 20, or part of a system according to claim 22, wherein the test apparatus has at least one mating part (71) for forming a plug-in connection with a plug part (10), and is configured for generating test signals from information that is stored in the memory (13) of a plug part (10), the test signals being applicable to the cable wires leading out from the plug part (10) in order to generate measuring signals.

24. Arrangement according to claim 23, in which a test program for generating the test signals is stored, the test program requiring configuration parameters to carry this out, wherein these configuration parameters are definable using information that is stored in the plug part (10).

25. Arrangement according to one of claims 23 to 24, which is configured for requesting from the plug part (10) information containing setpoint measured values, receiving the measuring signals generated by the test signals and comparing the measuring signals to the setpoint measured values and generating an error signal in the event of predefined deviations.

26. Arrangement according to one of claims 23 to 25, which comprises a test device (70) which includes the at least one mating part (71), and a measuring device (60) in order to carry out measurements at certain locations in the network, wherein the measuring device (60) is preferably mobile with respect to the test device (70), and/or wherein the test device (70) and the measuring device (60) are preferably set up for wireless transmission of information.

27. Arrangement according to claim 26, wherein the measuring device (60) has output means, such as a display, for providing instructions to a user, and has input means for inputting information by the user.

28. Arrangement according to one of claims 26 to 27, wherein at least one of the devices (50) connected to the network has at least a normal operating mode and a test mode, wherein, in the test mode, the device (50) is used as a test device (70) or measuring device (60).

29. Arrangement according to one of claims 23 to 28, which is configured for creating a report of the test sequence and swapping out the report from the test apparatus.

## Revendications

1. Pièce embrochable (10) pouvant être raccordée, afin de réaliser une connexion embrochable, à une contrepartie (1) qui sert à raccorder un appareil (50), comprenant au moins une mémoire non volatile (13), une unité de communication (15), un microprocesseur (14) et un câble (12) qui part de la pièce embrochable pour servir de connexion à un réseau, **caractérisée en ce que** des informations sont enregistrées dans la mémoire (13) qui comprennent des combinaisons de versions matérielles et logicielles admissibles pour l'autorisation d'un fonctionnement de l'appareil.

2. Pièce embrochable selon la revendication 1, où un logiciel pour la commande de l'appareil (50) est enregistré dans la mémoire (13).

3. Pièce embrochable selon l'une des revendications précédentes, laquelle est agencée pour initier une communication avec l'appareil (50) de manière autonome également.

4. Pièce embrochable selon l'une des revendications précédentes, laquelle est agencée pour évaluer des informations enregistrées dans la mémoire (13) et/ou transmises par l'appareil (50) afin de générer des signaux de commande qui débloquent ou bloquent le fonctionnement de l'appareil (50) et/ou qui configurent l'appareil (50) pour son fonctionnement.

5. Pièce embrochable selon la revendication 4, où l'appareil (50) présente différents modes de fonctionnement et les signaux de commande générés servent à débloquer ou bloquer sélectivement l'appareil pour au moins un mode de fonctionnement, de préférence tous les modes de fonctionnement, et/ou de configurer l'appareil (50) pour au moins un mode de fonctionnement, de préférence tous les modes de fonctionnement.

6. Pièce embrochable selon l'une des revendications précédentes, où l'une au moins des informations suivantes est enregistrée dans la mémoire (13):
- paramètres de configuration nécessaires au démarrage et/ou au fonctionnement de l'appareil (50),
- niveau de version matérielle de l'appareil (50),
- niveau de version logicielle de l'appareil (50),
- combinaisons permises de versions matérielles et logicielles, ces combinaisons étant certifiées,
- type de l'appareil (50), définissant sa fonctionnalité, ledit type définissant de préférence l'un au moins des appareils suivants: appareil d'automatisation, appareil de terrain, appareil de test (70) pour générer des signaux de test applicables à un réseau, appareil de mesure (60) pour détecter des signaux de mesure engendrés par les signaux de test,
- paramètres de configuration pour la configuration de l'appareil (50) en tant qu'appareil de test (70) et/ou appareil de mesure (60),
- au moins un algorithme d'évaluation afin d'évaluer des données enregistrées dans la mémoire (13) et/ou de données transmises par l'appareil (50),
- informations relatives à un réseau, la contrepartie (1) de l'appareil (50) servant de connexion au réseau, les informations relatives au réseau comprenant notamment: points de départ et d'arrivée dans le réseau des conducteurs de câble partant de la pièce embrochable (10) et informations sur les sources et charges reliées par ces conducteurs de câble,
- une signature pour l'identification univoque de la pièce embrochable (10),
- au moins un algorithme de commande pour tester un réseau, en particulier d'un faisceau de câbles,
- tableau de séquences de test, lequel définit au moins: les points à mesurer dans un réseau, la conception des signaux de test en fonction de ces points, des valeurs nominales de mesure, les critères déterminant les écarts admissibles des signaux de mesure engendrés par les signaux de test par rapport aux valeurs nominales de mesure.

7. Pièce embrochable selon l'une des revendications précédentes, où des informations sont enregistrées dans la mémoire (13) qui sont encapsulées de telle manière qu'elles ne sont pas directement lisibles par l'appareil (50), et/ou qui sont protégées par une clé.

8. Pièce embrochable selon la revendication 7, où les informations encapsulées et/ou protégées par une clé ne sont accessibles par une demande de service de l'appareil (50) que lorsque la pièce embrochable (10) a retransmis un jeton à l'appareil (50) afin de déterminer ainsi de préférence les possibilités d'accès de l'appareil (50) aux informations dans la mémoire (13) et/ou les modes de fonctionnement admis de l'appareil.

9. Pièce embrochable selon l'une des revendications précédentes, laquelle présente des moyens (16) permettant le transfert filaire ou sans fil d'informations à l'appareil (50), de préférence à la contrepartie (1).

10. Pièce embrochable selon l'une des revendications précédentes, laquelle comprend un récepteur d'énergie (17) pour l'alimentation de la pièce embrochable (10) par l'intermédiaire de la contrepartie (1), le transfert d'énergie de la contrepartie (1) à la pièce embrochable étant sans fil ou filaire, et la pièce embrochable (10) étant de préférence exempt d'une source d'énergie.

11. Procédé de programmation d'une pièce embrochable selon l'une des revendications précédentes, où des informations enregistrées dans la mémoire (13) de la pièce embrochable (10) sont lues et/ou modifiées et/ou des informations sont stockées dans la mémoire (13), les informations enregistrées ou stockées, respectivement, comprenant des combinaisons admissibles de versions matérielles et logicielles pour l'autorisation d'un fonctionnement de l'appareil.

12. Agencement comprenant des câbles, en particulier un faisceau de câbles, auquel sont raccordés des pièces embrochables (10) selon l'une des revendications 1 à 10.

13. Agencement comprenant au moins une pièce embrochable selon l'une des revendications 1 à 10 et un appareil (50) qui comporte au moins une contrepartie (1) permettant la réalisation d'une connexion embrochable avec la pièce embrochable (10).

14. Agencement selon la revendication 13, où l'appareil (50) présente un ou plusieurs modes de fonctionnement et où des informations sont enregistrées dans la mémoire (13) de la pièce embrochable (10) lesquelles peuvent être évaluées par le microprocesseur (14) de la pièce embrochable (10) afin de débloquer ou bloquer l'appareil (50) pour un mode de fonctionnement particulier et/ou afin de configurer l'appareil (50).

15. Agencement selon l'une des revendications 13 à 14, où une signature de pièce embrochable (Sig10) enregistrée dans la mémoire (13) de la pièce embrochable (10) permet une identification univoque de la pièce embrochable (10), la signature de pièce embrochable étant de préférence également utilisable pour vérifier l'attribution correcte de la pièce embrochable (10) et de la contrepartie (1), et où une signature d'appareil (Sig50) est enregistrée dans l'appareil (50), laquelle permet son identification univoque, la pièce embrochable (10) étant de préférence agencée de manière à transmettre, après réception de la signature d'appareil et vérification de celle-ci, un jeton (IDT) correspondant au résultat de la vérification à l'appareil afin de rendre accessibles à l'appareil (50) des informations enregistrées dans la mémoire (13) de la pièce embrochable (10).

16. Agencement selon l'une des revendications 13 à 15, où l'appareil (50) est conçu pour un fonctionnement normal et où une liste de combinaisons admissibles de versions matériel-logiciel est enregistrée dans la mémoire (13) de la pièce embrochable (10) et des informations d'appareil relatives à son matériel et logiciel actuels sont enregistrées dans l'appareil (50), la pièce embrochable (10) ou l'appareil (50) comprenant une unité logicielle qui est de préférence inaltérable et certifiée, l'unité logicielle étant agencée de manière à comparer les informations d'appareil relatives à la combinaison matérielle-logicielle (AK) actuelle à ladite liste et à la vérifier quant à son admissibilité, l'appareil (50) étant de préférence agencé de telle manière qu'il ne peut pas entrer en fonctionnement normal sans la vérification de l'admissibilité et la confirmation de celle-ci.

17. Agencement selon la revendication 16, où la pièce embrochable (10) et l'appareil (50) sont agencés de telle manière que pendant une phase d'autorisation, un jeton (AT) est transmis de la pièce embrochable (10) à l'appareil (50), à l'aide duquel les accès de service ultérieurs de l'appareil (50) aux informations dans la mémoire (13) de la pièce embrochable (10) sont autorisés.

18. Agencement selon l'une des revendications 13 à 17, où des informations encapsulées et/ou protégées par une clé sont enregistrées dans la mémoire (13) de la pièce embrochable (10), de préférence dans une liste extensible, et où l'appareil est un appareil de lecture et/ou d'écriture agencé pour lire, modifier et/ou compléter ces informations.

19. Agencement selon l'une des revendications 13 à 18, où un logiciel de démarrage est enregistré dans l'appareil (50), lequel détermine le démarrage de l'appareil et comprend des paramètres définissables qui sont enregistrés dans la mémoire (13) de la pièce embrochable (10).

20. Agencement selon l'une des revendications 13 à 19, où la contrepartie (1) de l'appareil (50) présente l'une ou plusieurs des propriétés suivantes:
- la contrepartie (1) sert de connexion à un réseau,
- la contrepartie (1) sert de connexion pour la configuration de l'appareil (50), de sorte que celui-ci dispose d'une connexion supplémentaire à un réseau,
- la contrepartie (1) est fonctionnellement reliée à un microprocesseur (4) de l'appareil (50),
- la contrepartie (1) est agencée sur un boîtier de l'appareil (50).

21. Procédé d'opération d'un appareil dans lequel l'un au moins des composants suivants est utilisé:
- une pièce embrochable selon l'une des revendications 1 à 10,
- un agencement selon la revendication 12,
- un agencement selon l'une des revendications 13 à 20, la pièce embrochable recevant, afin d'autoriser le fonctionnement de l'appareil, de celui-ci des informations relatives aux composants matériels et logiciels actuellement utilisés et chargés, respectivement, et les vérifiant à l'aide des informations enregistrées dans la mémoire de la pièce embrochable, lesquelles comprennent les combinaisons admissibles de versions matérielles et logicielles.

22. Installation dans un avion ou véhicule, en particulier un véhicule sur rails ou un véhicule à moteur, laquelle comprend l'un au moins des composants suivants:
- une pièce embrochable selon l'une des revendications 1 à 10,
- un agencement selon la revendication 12,
- un agencement selon l'une des revendications 13 à 20.

23. Agencement comprenant au moins une pièce embrochable (10) selon l'une des revendications 1 à 10 et un dispositif de test pour tester un réseau qui comporte plusieurs desdites pièces embrochables (10) faisant partie d'un agencement selon la revendication 12 ou l'une des revendications 13 à 20 ou d'une installation selon la revendication 22, le dispositif de test comprenant au moins une contrepartie (71) permettant de réaliser une connexion embrochable avec une pièce embrochable (10), et étant agencé de manière à générer à partir d'informations enregistrées dans la mémoire (13) d'une pièce embrochable (10) des signaux de test applicables à des conducteurs de câble partant de la pièce embrochable (10) afin d'engendrer des signaux de mesure.

24. Agencement selon la revendication 23, dans lequel est enregistré un programme de test pour la génération desdits signaux de test, lequel nécessite pour son exécution des paramètres de configuration, lesdits paramètres de configuration pouvant être déterminés au moyen d'informations enregistrées dans la pièce embrochable (10).

25. Agencement selon l'une des revendications 23 à 24, lequel est agencé de manière à demander à la pièce embrochable (10) des informations comprenant des valeurs nominales de mesure, à recevoir les signaux de mesure engendrés par les signaux de test et à les comparer aux valeurs nominales de mesure, et à générer un signal d'erreur en cas d'écarts prédéterminés.

26. Agencement selon l'une des revendications 23 à 25, lequel comprend un appareil de test (70) qui comporte au moins une contrepartie (71), et un appareil de mesure (60) afin d'effectuer des mesures à certains points du réseau, l'appareil de mesure (60) étant de préférence mobile par rapport à l'appareil de test (70) et/ou l'appareil de test (70) et l'appareil de mesure (60) étant de préférence agencés pour une transmission d'informations sans fil.

27. Agencement selon la revendication 26, où l'appareil de mesure (60) comprend des moyens de sortie, tels qu'un écran, pour fournir des instructions à un utilisateur, et des moyens de saisie pour la saisie d'informations par l'utilisateur.

28. Agencement selon l'une des revendications 26 à 27, où l'un au moins des appareils (50) reliés au réseau présente au moins un mode de fonctionnement normal et un mode de fonctionnement test, l'appareil (50) en mode de test servant d'appareil de test (70) ou d'appareil de mesure (60).

29. Agencement selon l'une des revendications 23 à 28, lequel est agencé de manière à générer un rapport sur la procédure de test et à le transférer hors du dispositif de test.
